# EUROPEAN PATENT SPECIFICATION

(11) **EP 4 462 265 B1**
(45) Date of publication and mention of the grant of the patent: **13.05.2026**
(21) Application number: 24173711.3
(22) Date of filing: 02.05.2024
(51) Int. Cl.: G06F 12/0864, G06F 12/0895, G06F 12/128

(54) **OPERATIONS IN A PROCESSOR CACHE BASED ON OCCUPANCY STATE**
OPERATIONEN IN EINEM PROZESSOR-CACHE BASIEREND AUF DEM BELEGUNGSZUSTAND
OPÉRATIONS DANS UNE MÉMOIRE CACHE DE PROCESSEUR SUR LA BASE D'UN ÉTAT D'OCCUPATION

(30) Priority: 09.05.2023 US 202318314495
(43) Date of publication of application: 13.11.2024
(73) Proprietor: Nokia Solutions and Networks Oy, 02610 Espoo (FI)
(72) Inventor: DUTTA, Pranjal Kumar, Sunnyvale, 94086 (US)
(74) Representative: Zinsinger, Norbert

(56) References cited:
- CN-A- 111 338 987
- US-A1- 2014 281 248
- US-A1- 2016 350 219
- US-B2- 9 652 400
- US-B2- 9 720 847
- YAN PEIXIANG ET AL: "A Global Replacement Based on Actual Set Association", EMBEDDED SOFTWARE AND SYSTEMS, 2009. ICESS '09. INTERNATIONAL CONFERENCE ON, IEEE, PISCATAWAY, NJ, USA, 25 May 2009 (2009-05-25), pages 103 - 108, XP031469350, ISBN: 978-1-4244-4359-8

## Description

### TECHNICAL FIELD

Various example embodiments relate generally to computer systems and, more particularly but not exclusively, to caches associated with processors of computer systems.

### BACKGROUND

Computer systems utilize various types of processors to perform various functions in various contexts. Processors utilize various types of caches to perform various functions in various contexts. CN 111 338 987 A discloses a method for quickly invalidating set associative translation look aside buffer entries, by providing a group valid bit of group corresponding to translation look aside buffer item and row valid bit of corresponding translation look aside buffer item.

US 2014/281248 A1 discloses a method obtaining a maximum value indicating maximum number of ways containing modified data in multiple ways and associative data cache and applying a read/write policy recognizing said maximum value.

### SUMMARY

The invention is defined in the appended claims. The dependent claims set out particular embodiments.

### BRIEF DESCRIPTION OF THE DRAWINGS

The teachings herein can be readily understood by considering the following detailed description in conjunction with the accompanying drawings, in which:
FIG. 1 depicts an example embodiment of a computing system including a processor and a memory for illustrating an instruction pipeline supported by the processor;
FIG. 2 depicts an example embodiment of a processor for use as the processor of the computing system of FIG. 1;
FIG. 3 depicts an example embodiment of a multi-core processor including multiple cores and multiple levels of caches;
FIG. 4 depicts an example embodiment of an N-way set associative cache for use in a processor;
FIG. 5 depicts an example embodiment of a field partitioning an address of a memory block in memory;
FIG. 6 depicts an example embodiment of P-tag, P-index, and P-offset mappings of an address of a memory block to be stored in a cache based on a write operation;
FIG. 7 depicts an example embodiment of a set associative cache before storing a memory block where occupancy state information is not supported;
FIG. 8 depicts an example embodiment of a set associative cache before storing a memory block where occupancy state information is supported;
FIG. 9 depicts an example embodiment of a logic circuit configured to determine a full-bit to be used as occupancy state information for a write operation;
FIG. 10 depicts an example embodiment of P-tag, P-index, and P-offset mappings of an address of a memory block to be read from a cache based on a read operation;
FIG. 11 depicts an example embodiment of a set associative cache before reading a memory block where occupancy state information is not supported;
FIG. 12 depicts an example embodiment of a set associative cache before reading a memory block where occupancy state information is supported;
FIG. 13 depicts an example embodiment of a logic circuit configured to determine an empty-bit to be used as occupancy state information for a read operation;
FIG. 14 depicts an example embodiment of a set associative cache including occupancy state information;
FIG. 15 depicts an example embodiment of an N-way set associative cache configured to support use of occupancy state information;
FIG. 16 depicts an example embodiment of method for storing a memory block into a set associative cache supporting occupancy state information;
FIG. 17 depicts an example embodiment of a method for finding an empty cache line in a set associative cache, for use in conjunction with the method of FIG. 16;
FIG. 18 depicts an example embodiment of method for reading a memory block from a set associative cache supporting occupancy state information;
FIG. 19 depicts an example embodiment of a method for finding an empty cache line in a set associative cache, for use in conjunction with the method of FIG. 18;
FIG. 20 depicts an example embodiment of a method for operating a cache using occupancy state information; and
FIG. 21 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting operation of a processor cache are presented herein. Various example embodiments for supporting operation of a processor cache may be configured to support operation of an N-way set associative cache based on occupancy state information. Various example embodiments for supporting operation of an N-way set associative cache may be configured to support operation of the N-way set associative cache based on occupancy state information where the occupancy state information may be used to support more efficient memory operations on the N-way set associative cache. Various example embodiments for supporting operation of an N-way set associative cache based on occupancy state information may be configured to maintain occupancy state information for a set of the N-way set associative cache to support more efficient memory operations on the set of the N-way set associative cache, such as by preventing a way-by-way search to find an empty way of the set for a write operation where the occupancy state information of the set is indicative that the set is full or preventing a way-by-way search to find data element stored in the set for a read operation where the occupancy state information of the set is indicative that the set is empty.

In at least some example embodiments, the N-way set associative cache may be configured to support a memory operation for a memory block based on occupancy state information by maintaining occupancy state information for a set and performing the memory operation for the memory block based on the occupancy state information. The memory operation may be a write operation or a read operation. The occupancy state information for the set may include various types of occupancy state information which may be used for supporting more efficient memory operations, which may vary for different memory operations. For example, the occupancy state information for a set may include information indicative as to whether the set is full (e.g., a full-bit which may be set in a manner indicative as to whether or not the set is full, an indication of a number of ways of the set that are currently occupied, an indication of a number of ways of the set that are currently empty, or the like, as well as various combinations thereof). For example, the occupancy state information for the set may include information indicative as to whether the set is empty (e.g., an empty-bit which may be set in a manner indicative as to whether or not the set is empty, an indication of a number of ways of the set that are currently empty, an indication of a number of ways of the set that are currently occupied, or the like, as well as various combinations thereof). It will be appreciated that various other types of occupancy state information may be supported for enabling more efficient memory operations on an N-way set associative cache.

In at least some example embodiments, during a write operation for writing a memory block to a set of the N-way set associative cache, the N-way set associative cache may be configured to check the occupancy state information for the set, before scanning the set for availability of an empty way that could be used to store the memory block, to determine whether the set of the cache is full such that an eviction procedure would need to be used in order to write the memory block to the set. It is assumed that the cache or the processor employs mechanisms to determine *a priori* that the memory block to be stored does not exist in the set. For example, the set occupancy information for the set that may be checked for determining whether the set of the cache is full may include a full-bit which may be set in a manner indicative as to whether or not the set is full, an indication of a number of ways of the set that are currently occupied, an indication of a number of ways of the set that are currently empty, or the like, as well as various combinations thereof. It will be appreciated that this enables the N-way set associative cache to determine whether an eviction procedure will need to be performed in order to write the memory block to the set without having to first scan each of the ways of the set to determine availability of an empty way that can be used to store the memory block, thereby reducing the number of clock cycles and power consumption needed to store a memory block.

In at least some example embodiments, during a read operation for reading a memory block to a set of the N-way set associative cache, the N-way set associative cache may be configured to check the occupancy state information for the set, before scanning the set to find a way that may be storing the memory block, to determine whether the set of the cache is empty such that there is no need to search each of the ways to determine whether the memory block is stored in the set. For example, the set occupancy information for the set that may be checked for determining whether the set of the cache is full may include an empty-bit which may be set in a manner indicative as to whether or not the set is empty, an indication of a number of ways of the set that are currently empty, an indication of a number of ways of the set that are currently occupied, or the like, as well as various combinations thereof. It will be appreciated that this enables the N-way set associative cache to determine whether or not the set should be searched for the memory block without having to scan each of the ways of the set to determine whether the memory block is stored in the set, thereby reducing the number of clock cycles and power consumption needed to read a memory block.

It will be appreciated that these and various other example embodiments and advantages or potential advantages of example embodiments for supporting operation of a processor cache based on occupancy state information may be further understood by way of reference to the various figures, which are discussed further below.

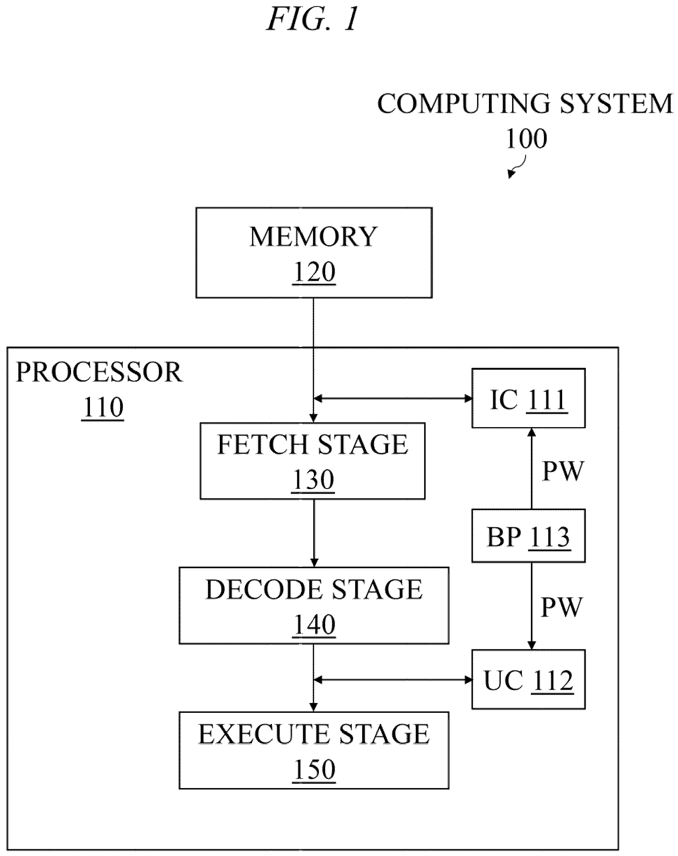

FIG. 1 depicts an example embodiment of computing system including a processor and a memory for illustrating an instruction pipeline supported by the processor.

The computing system 100 includes a processor 110 and a memory 120. The processor 110 includes an instruction cache (IC) 111, a micro-operations cache (UC) 112, and a branch predictor (BP) 113. The high level stages in the pipeline supported by the processor 110 include a fetch stage 130, a decode stage 140, and an execute stage 150.

In the processor 110, the format and encoding of the instructions in a program to be executed by the processor 110 is determined by the Instruction Set Architecture (ISA) of the processor 110. For example, some well-known ISAs include x86/x86-64, IA-32/IA-64, MIPS, ARM, and so forth; however, the micro-architecture of a processor typically cannot execute the instructions of an ISA in their native form because of their complexity. An ISA is designed to offer sophisticated operations which, in turn, also keep the program compact, i.e., reduces the footprint of a program in the memory. It is noted that the optimal footprint of a program in memory is particularly important for optimal use of the IC. A majority of ISAs offer variable-length instructions, which further adds to the complexity of execution. So, at the micro-architectural level of a processor, instructions are represented by fixed-length simpler micro-operations (generally referred to as "micro-ops" or "UOPs"). An ISA instruction is broken down into one or more fixed-length UOPs. UOPs perform basic operations on data stored in one or more registers, including transferring data between registers or between registers and external buses, performing arithmetic and logical operations on registers, or the like. For example, for an add-register-to-memory ISA instruction that performs addition of the value in a register X to the value in a memory location M, the instruction is broken down into a sequence of three separate UOPs as follows: (1) load from M to a register Y, (2) add Y to X, and (3) store X to M.

In the processor 110, execution of a program is based on a pipeline which, as indicated above, includes the fetch stage 130, the decode stage 140, and the execute stage 150. The fetch stage 130 retrieves a block of instructions of a program from the IC 111 or the memory 120. The IC 111 is located on-board the processor 110. The IC 111 is generally much smaller in size (e.g., 32kB, 64kB, 128kB, or the like) than the memory 120 and, thus, much faster than the memory 120. The IC 111 caches blocks of instructions fetched from the memory 120 in units called "IC lines" (or, more generally, cache lines). If a set of instructions is repeatedly fetched then those instructions are likely available in the IC 111, so a hit in the IC 111 reduces the time to fetch instructions (as compared with fetching the instructions from the memory 120). The IC 111 is agnostic of syntax and semantics of instructions and an IC line caches a memory block, i.e., all instructions in a fixed range of addresses in the memory 120. The typical size of an IC line is 64B, although it will be appreciated that other sizes can be supported. The processor 110 fetches a block of instructions from the memory 120 only if the IC line is not found in the IC 111. In the IC 111, a memory block is identified by the first memory address in the memory block. In the decode stage 140, instructions fetched during the fetch stage 130 are dynamically decoded by the processor 110 to the native UOPs of the instructions. This dynamic decoding also provides a cleaner separation of the "stable" and "standardized" ISA from the underlying micro-architecture of the processor 110 that is free to define its own UOP set. As a result, a program that has been written for an ISA can run on different micro-architectures supporting that ISA. This has enabled program compatibility between different generations of processors to be easily achieved. For example, different micro-architectures can support the same ISA, but each can define their own native UOP set. The execute stage 150 executes the UOPs supplied by the decode stage 140.

In the processor 110, the fetch stage 130 and the decode stage 140 generally are costly in terms of clock cycles as well as power consumption. So, many modern processors implement another instruction cache, typically referred to as a micro-op cache (UC) or decoded stream buffer (DSB), which stores the already decoded UOPs. This is illustrated as the UC 112 of the processor 110. When the processor 110 needs to execute an instruction and its decoded UOPs already exists in the UC 112, then the UC 112 can directly supply the UOPs to the execute stage 150. The UC 112 is generally much smaller in size (e.g. 1.5kB, 2kB, 3kB, or the like) than the IC 111 and the memory 120 and, thus, much faster than the IC 111 and the memory 120 (typically operating at the clock speed of the processor 110). A hit in UC 112 eliminates the fetch stage 130 and the decode stage 140, both of which are costly, thereby improving the performance and power budget of the processor 110. An instruction is fetched and decoded only if it is a miss in the UC 112, otherwise the fetch stage 130 and the decode stage 140 can be powered off. It is noted that, although omitted from FIG. 1 for purposes of clarity, some processors may use a component called a Trace Cache (TC) instead of a UC, where a TC is simpler than a UC since a TC is a single large block including all instructions or micro-operations of a control flow.

In the processor 110, the UC 112 stores the UOPs received from the decode stage 140 in smaller sized blocks, but in the sequential order of execution. This means that each branch, conditional or unconditional, makes the processor 110 start with a new UC line even if the current IC line is not yet filled. This simple rule allows high bandwidth fetching from the UC 112 since, once there is a hit in UC 112, then the entire UC line can be supplied to the execute stage 150 without worrying about a change of execution sequence in the middle of a UC line. Herein, unless indicated otherwise, an address of an instruction in memory is referred to as an Instruction Pointer (IP). A UC line is identified by the IP of the parent instruction of the first UOP in the UC line; other than that no correlation exists between the UOPs in a UC line and their corresponding parent instructions, and it is noted that such correlation is not required since the entire UC line is supplied to the execute stage 150. As a result, UOPs in a UC line typically cannot be looked up by the IPs of their parent instructions.

In the processor 110, the BP 113 is configured to predict the outcome of a conditional branch instruction while fetching instructions from the memory 120, the IC 111, or the UC 112. A program may include branch instructions that alter the sequence of instructions executed by the processor 110. Branch instructions generally are of two types: one-way unconditional branch instruction and two-way conditional branch instruction. An unconditional branch instruction always jumps to a different location in program memory where a branch of the program code is stored. A conditional branch instruction can either be (1) "not taken" and continue execution with the first branch of the code which follows immediately after the conditional branch instruction or (2) "taken" and jump to a different place in program memory where the second branch of the code is stored. The outcome of a conditional branch instruction depends on certain conditions, such as a predicate variable. It is not known for certain whether a conditional branch will be taken or not taken until the condition has been calculated and the conditional branch has passed the execute stage 150 in the instruction pipeline. That means the processor 110 would have to wait until the conditional branch instruction has passed the execute stage 150 before the next instruction can enter the fetch stage 130 in the pipeline, which basically stalls the pipeline. To solve this problem, the front-end of the processor 110 tries to guess whether the conditional branch is more likely to be taken or not taken. The branch that is guessed to be the most likely is then fetched and speculatively executed. The BP 113 is logic circuitry that enables the front-end of the processor 110 to predict the outcome of a conditional branch instruction. If later it is detected that the guess was wrong, then the speculatively executed or partially executed instructions are discarded and the pipeline starts over with the correct branch, incurring a delay called "branch misprediction penalty".

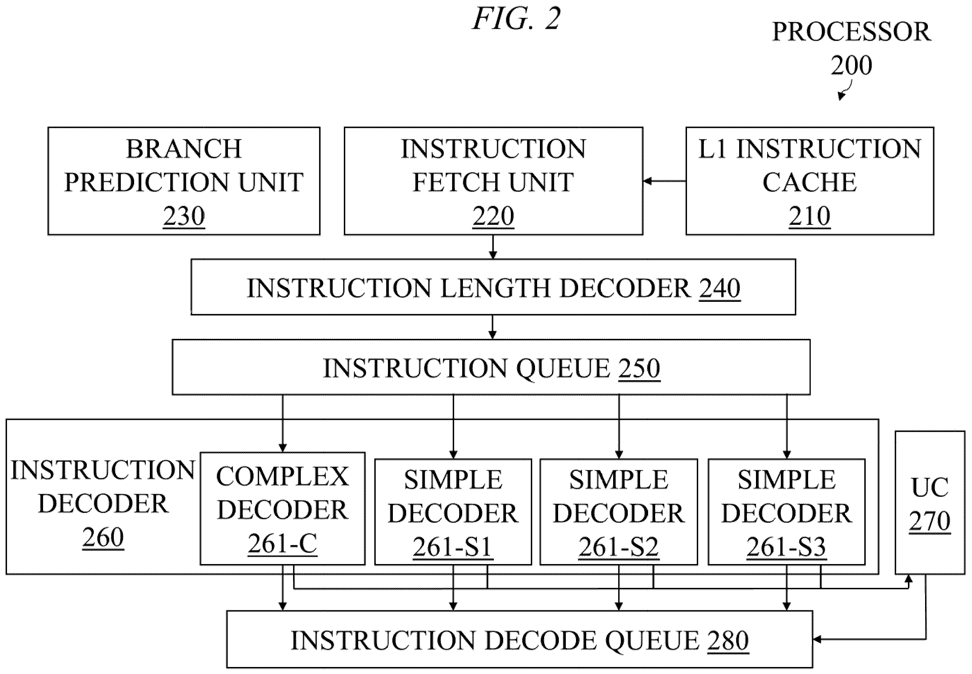

It will be appreciated that processors generally implement each of the three high-level stages of the instruction pipeline using component stages. As a result, a pipeline of a processor may be composed of a large number of stages (e.g., 20 or more stages). An example of a processor, for illustrating stages used to implement portions of the instruction pipeline, is presented with respect to FIG. 2.

FIG. 2 depicts an example embodiment of a processor for use as the processor of the computing system of FIG. 1.

The processor 200 may include a frontend and a backend. It is noted that while details of the frontend are illustrated, details of the backend have been omitted for purposes of clarity.

The processor 200 includes a level 1 (L1) instruction cache (L1-IC) 210, an instruction fetch unit (IFU) 220, a branch prediction unit (BPU) 230, an instruction length decoder (ILD) 240, an instruction queue (IQ) 250, an instruction decoder (ID) 260, a UOP cache (UC) 270, and an instruction decode queue (IDQ) 280. It will be appreciated that the IFU 220 and BPU 230 may be considered to form the fetch stage while the ILD 240, IQ 250, ID 260, and IDQ 280 may be considered to form the decode stage.

The L1-IC 210 is a cache that is part of the cache hierarchy of the processor 200, and which may be further understood by considering the cache hierarchy of processors and the cache arrangement of caches in general.

In general, a cache is a smaller, faster memory, closer to a processor, which stores copies of the program instructions or program data from frequently accessed memory locations to reduce the average cost of access (time or energy). The program instructions or program data are stored in the cache by blocks of contiguous memory locations, typically referred to as cache lines, where each cache line is indexed in the cache by the first memory address in the cache line. Caches benefit from the temporal and spatial locality of memory access patterns in a program, where spatial locality refers to use of relatively close memory locations (e.g., within a cache line) and temporal locality refers to the reuse of specific caches line within a relatively small time duration. Many processors use multiple levels of caches. For example, a common processor architecture might utilize at least three levels (L) of caches, which are typically referred to as L1, L2, and L3. The L1 cache is the smallest and nearest to the processor cores and, thus, faster than the other cache levels. Typically, the L1 cache is split into two portions: the L1 Instruction Cache (e.g., 32kB in size, 64kB in size, or the like, although other sizes may be used) which holds only program instructions and the L1 Data Cache (e.g., 32kB in size, 64kB in size, or the like, although other sizes may be used) which holds only program data. The L2 cache (e.g., 256kB in size, 512kB in size, or the like, although other sizes may be used) and the L3 cache (e.g., 2MB in size, 4MB in size, or the like, although other sizes may be used) are the subsequent levels which are usually unified caches (meaning that they hold both program instructions and program data). The L3 cache typically is common for the processor cores in a multi-core processor and, thus, is located outside of the processor cores. It will be appreciated that the cache size and access latency grow according to the levels. If the cache line corresponding to a memory address sought is missing in the L1 cache, then the processor performs lookups in subsequent levels of caches (e.g., L2 cache, then L3 cache, and so forth). If the memory address is missing in all of the available cache levels, then the processor can access the main memory to retrieve the instruction or data at the memory address. So, main memory is accessed only if the memory address is missing in all caches. The missing block, once located, is brought into a cache line in the L1 cache.

In general, a cache is typically organized as set associative array, which can be imagined as MxN matrix. The cache is divided into M sets and each set contains N cache lines. To place a memory block into the cache, its address is typically divided into three fields: tag, index, offset. A memory block is first mapped into a set based on 'index bits' derived from the address of the memory block. Then the memory block is placed into a cache line in the set and a 'tag' is stored in the cache line. The tag is composed of the bits in the address of the memory block (other than the index bits) that can distinguish between the cache lines sharing the same set. The offset field refers to any address within a cache line. The offset field is composed of a few least significant bits of the address of the memory block and the number of bits is dependent on the size of the cache line. For example, if the cache line size is 64B, then the 6 least significant bits of the addresses of the memory blocks may be used as the offset bits. As previously indicated, the term "IP" is used to denote the memory address of an instruction, and the three fields of an IP that are used to map a block of instructions into a cache are referred to as IP-tag, IP-index, and IP-offset. In a typical cache, if all cache lines in a set are occupied while trying to store a new memory block, then an existing cache line in the set is evicted (a replacement policy picks which cache line to evict) to make way for the new memory block. When the evicted cache line is accessed later, then it will result in a miss in the cache and, thus, will need to be brought back into the cache from the memory hierarchy. Such misses are referred to as conflict misses and repeated conflict misses due to collisions between cache lines sharing the same set is referred to as thrashing. If a cache line is evicted due to capacity overflow (i.e., no more unused cache lines across the cache) and the evicted cache line is accessed again then it will result in a miss in the cache. Such misses are called capacity misses. Capacity misses are extremely rare and most often the misses are due to thrashing.

The IFU 220 is responsible for feeding the processor with instructions to execute, and thus, it is the first component where instructions are processed. The IFU 220 mainly includes the required logic to compute the next fetch address and then fetch the instructions from the L1-IC 210. The instructions are fetched from the L1-IC 210 by the IFU 220 in streams of raw bytes.

The BPU 230 is configured to predict the next fetch address for the IFU 220 because, otherwise, branch instructions introduce a significant extra level of complexity in fetching streams of instructions, since the correct fetch address cannot be calculated until the branch instruction itself is executed. By default, instructions are processed by a processor sequentially. This sequential execution can be disrupted by the control instructions (e.g., conditional branches, unconditional branches, subroutine calls and subroutine returns, and so forth) to start executing an instruction sequence starting at a new address (the target address). For example, JE (Jump If Equal) is an example of a conditional branch instruction in x86 which is dependent on equality of two variables (data elements). A conditional branch is data-dependent (e.g., value of data acts as the condition) and branches to the target address only if the condition is true. An unconditional branch instruction always branches to the target address. For example, instructions such as CALL, RET, and JUMP are examples of unconditional branches for a subroutine call, a subroutine return, and an unconditional branch, respectively, in x86. Any control instruction other than a conditional branch instruction will switch the execution sequence to the target address specified in the instruction. Herein, the target instruction sequence of a control instruction is referred to generally as a control block. Execution of a program can be viewed as executing a chain of certain control blocks. Herein, an order of execution of control blocks in a program is referred to as a control flow (i.e., flow of control). Conditional branches (e.g., JE) can generate multiple control flows in a program since every such branch is a fork and the execution can go either way on the fork based on the condition of the fork. Control instructions introduce significant extra complexity in fetching streams of instructions, since the correct fetch address after the control instruction cannot be calculated until the backend executes the control instruction itself. For this reason, the frontend of high-performance processors (specifically, the BPU 230) predicts the next fetch address and speculatively starts fetching from the predicted address. There are two parts in this prediction. The first is predicting the direction of the branch taken by the control instruction, i.e., taken to the target sequence or not taken. The second part is predicting the target address of a branch. Once the direction of a branch is predicted, then the memory address of the control instruction and its predicted target address is stored in a Branch Target Buffer (BTB), which is a cache organized similar to the set associative array described in the context of L1-IC 210.

The ILD 240 provides a pre-decode phase. The ILD 240 separates the raw byte stream from the IFU 220 into a sequence of valid instructions and passes them to the IQ 250. For example, as indicated above, the length of an x86 instruction may vary between 1B to 15B and may reside in any byte address in program memory, thus requiring segregation of the raw byte stream into instructions of variable lengths. Decoding the length of several instructions per cycle adds a level of complexity, since the starting addresses have to be speculatively determined. That is, the fact that the starting address of the second instruction is not known until the length of the first instruction is computed, imposes serialization of the length decoding process, and parallelizing this requires determining the length of each instruction before decoding the instruction. The ILD 240 provides complex logic, based on many parallel and speculative computations, to help achieve such parallelization (although this comes at the price of increased power consumption).

The IQ 250 queues the instructions for the instruction decode phase. The IQ 250 queues the instructions, after the ILD 240 separates the instructions from the stream of raw bytes, for use by ID 260 in the instruction decode phase.

The ID 260 provides the instruction decode phase (which also may be referred to as a dynamic translation phase). In this phase, instructions are read from the IQ 250 and translated into subsequent functionally-equivalent UOPs. This translation is performed by one of several decoders in a set of decoders 261 including a complex decoder 261-C and three simple decoders 261-S 1 - 261-S3 (although it will be appreciated that fewer or more instruction decoders may be used). Herein, the ID 260, including the set of decoders 261, also may be referred to as a Micro Instruction Translation Engine (MITE). The resultant UOPs are passed by the ID 260 to the IDQ 280, through which the UOPs may then enter the backend of the processor 200. For example, in an x86-based processor, simple instructions can translate into one to four UOPs and complex instructions can translate into five or more UOPs. It will be appreciated that, for processors based on other ISAs, instructions may be translated into other numbers of UOPs.

The UC 270, generally speaking, is a UOP cache that is configured to cache UOPs for instructions previously decoded by the MITE, thereby obviating a need for the MITE to re-decode instructions previously decoded by the MITE in order to obtain the associated UOPs (namely, avoiding the LI-IC->IFU->ILD->IQ->MITE decode path). This type of cache may be referred to as an L0 Instruction Cache (L0-IC), which may store blocks of instructions decoded into UOPs, in units of UC lines. UOP caches benefit from the temporal locality of control flows in a program, due to which previously executed instructions are executed again. Before fetching an instruction address from the L1-IC 210, it is first looked up in the L0-IC. If the corresponding UC line exists (meaning a "hit") in the L0-IC, then the associated UOPs are directly supplied to the IDQ 280 for further execution, thereby completely avoiding the L1-IC->IFU->ILD->IQ->MITE decoding path. If the corresponding UC line does not exist (meaning a "miss") in the L0-IC, then the instruction goes through entire complex decoding cycle through the L1-IC->IFU->ILD->IQ->MITE decoding path. The ability to avoid the LI-IC->IFU->ILD->IQ->MITE decoding path in this manner provide significant advantages, as the decoding process from instructions to UOPs (especially for high performance processors) can be costly in terms of circuitry, power consumption, and time, especially where a single complex instruction may perform several operations. It will be appreciated that, since the backend of a processor can execute several UOPs per clock cycle (e.g., six UOPs per cycle), the rate at which UOPs are supplied from the frontend of the processor 200 to the backend of the processor 200 is a key element of performance which may be achieved by high hit rate in the UC 270.

The IDQ 280 queues UOPs to be provided to the backend of the processor 200. The UOPs that are queued by the IDQ 280 may include UOPs decoded by the ID 260 (MITE) and UOPs delivered from the UC 270.

The backend of the processor 200, although the details are omitted for purposes of clarity, may include various elements such as a reorder buffer (e.g., configured to receive UOPs from the frontend of the processor 200), a unified reservation station having a set of ports configured to direct UOPs to various chains of elements), various elements or chains of elements configured to support execution of UOPs, or the like, as well as various combinations thereof.

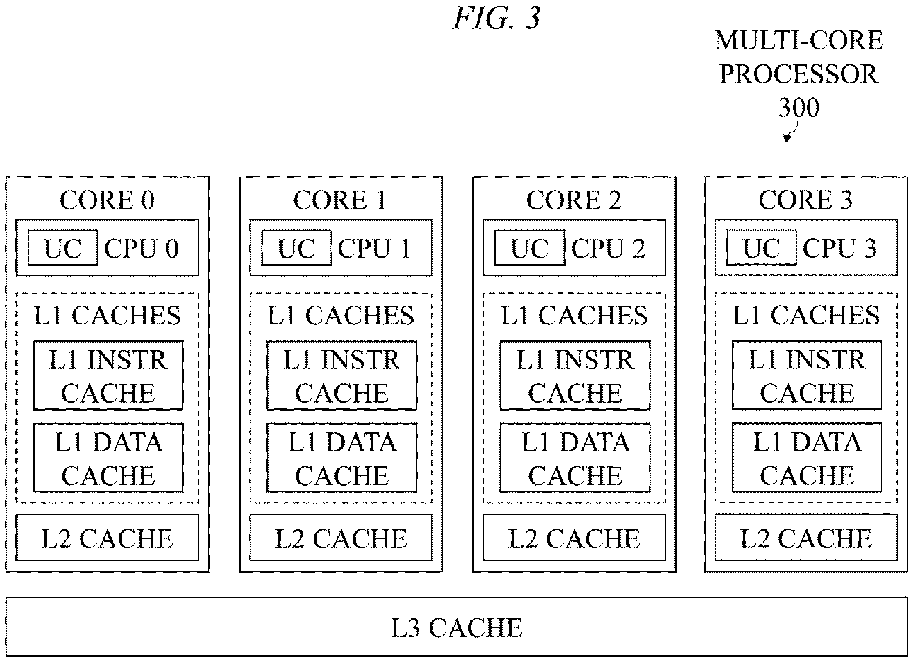

FIG. 3 depicts an example embodiment of a multi-core processor including multiple cores and multiple levels of caches.

The multi-core processor 300 includes four cores (denoted as Core 0, Core 1, Core 2, and Core 3) and three levels of caches (denoted using L1, L2, and L3 indicators). In the multi-core processor 300, each of the cores includes a CPU (illustratively, including a micro-operations cache (UC)) and L1 and L2 caches (illustratively, including an L1 instruction cache, an L1 data cache, and an L2 cache), respectively. In the multi-core processor 300, the four cores share an L3 cache.

In general, a core is configured to operate as a processor (e.g., similar to the only core of a single core processor). It will be appreciated that each of the cores has its own pipeline (e.g., following the conceptual pipeline of FIG. 1, which may be implemented like the pipeline of FIG. 2 or using any other suitable pipeline implementation) that independently fetches, decodes, and executes instructions. Accordingly, herein, the term "processor" may be referring to the only core of a single core processor, a core of a multi-core processor, or a combination of multiple cores of a multi-core processor.

In general, a cache is a smaller, faster memory, closer to a processor core, which stores copies of the program instructions or program data from frequently used memory locations to reduce the average cost (e.g., time and/or energy) of operating the processor core. The program instructions or program data are stored in the cache by blocks of contiguous memory locations, referred to as cache lines, where each cache line is indexed in the cache by the first memory address in the cache line. Caches benefit from the temporal and spatial locality of memory access patterns in a program. Spatial locality refers to use of relatively close memory locations (e.g., within a cache line). Temporal locality refers to the reuse of a specific cache line within a relatively small time duration.

In a multi-core processor, the levels of caches generally are arranged hierarchically as discussed below (although it will be appreciated that other arrangements are possible). L1 caches and L2 caches are specific to the processor cores, respectively, of the processor (i.e., each processor core has its own L1 cache(s) and L2 cache associated therewith), whereas the L3 cache of the processor is common for all of the processor cores in the processor. For each processor core, the L1 cache is the smallest cache and nearest to the processor core and, thus, faster than the rest of the cache levels. For each processor core, the L1 cache is split into two caches as follows: an L1 Instruction Cache (e.g., 32KB in size, 64KB in size, or any other suitable size) which holds program instructions and an L1 Data Cache (e.g., 32K in size, 64KB in size, or any other suitable size) which holds program data. The L1 Instruction Cache may correspond to the IC in FIG. 1. L2 caches (e.g., 256KB in size, 512KB in size, or any other suitable size) and L3 caches (e.g., 2MB in size, 4MB in size, or any other suitable size) are the subsequent levels of caches, which are usually unified caches (meaning that the caches hold both program instructions and program data). For each processor core, the L2 cache is further from the processor core than the L1 cache. As indicated above, the L3 cache of the processor is common for all of the processor cores in the processor. Size and access latency grow according to the levels. If the cache line corresponding to a memory address sought is missing in the L1 cache, then processor performs lookups in subsequent levels of caches. Main memory is accessed only if the memory address is missing in all caches. Eventually, the missing block is read into a cache line in the L1 cache. UC is located inside a core. It will be appreciated that the operation of ICs and UCs in processors may be further understood by first considering example embodiments for the logical organization of a cache in a processor.

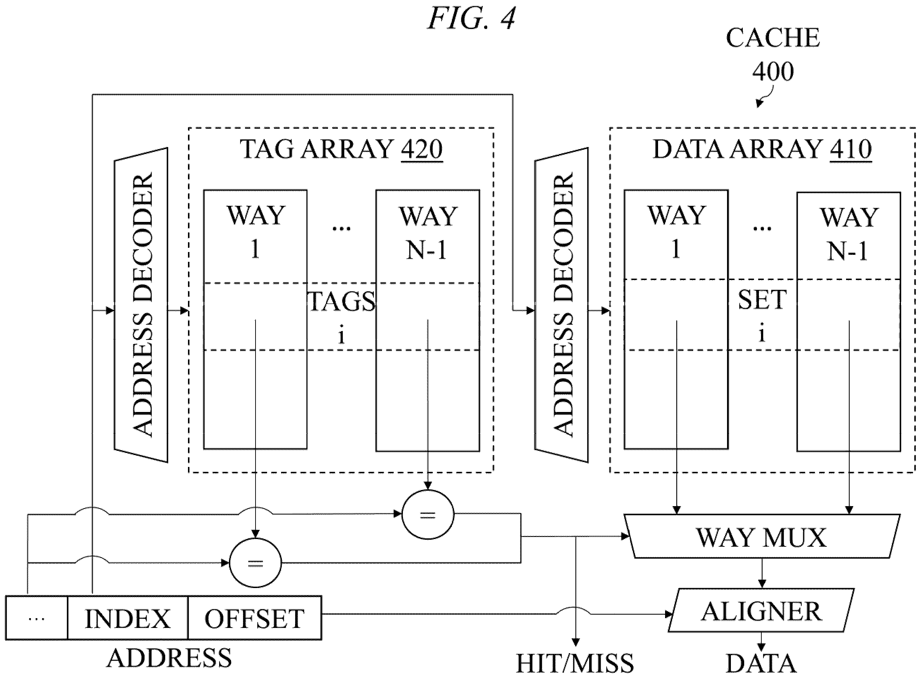

FIG. 4 depicts an example embodiment of an N-way set associative cache for use in a processor.

In FIG. 4, the N-way set associative cache 400 may be an instruction cache or data cache that stores memory blocks in cache lines. Herein, unless indicated otherwise, the address or an instruction or data in memory is referred to as a pointer, and the first address stored in a cache line is referred to as the pointer of the cache line or corresponding memory block.

As illustrated in FIG. 4, the N-way set associative cache 400 includes two main building blocks: a data array 410 and a tag array 420.

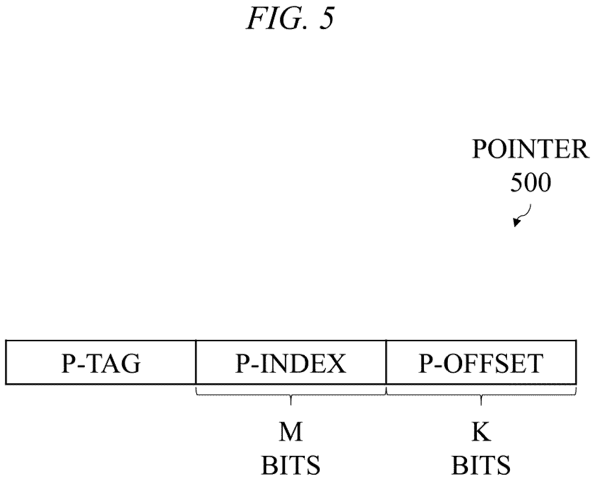

The data array 410 stores the cache lines, while the tag array 420 is used in order to match pointers into data array entries. The data array 410 is logically organized as a group of S number of sets. Each set consists of N number of cache lines. The number of cache lines in a set is called the "degree of associativity" of the cache. It is noted that a cache of associativity N is an N-way associative cache, where each way is a cache line. A memory block is first mapped into a set Si by its pointer and then placed into any cache line Nj in the set Si. To map a memory block into the N-way set associative cache 400, the pointer is partitioned into three fields as illustrated in FIG. 5.

FIG. 5 depicts an example embodiment of a field partitioning for an address of a memory block in memory. As previously indicated, the term "pointer" may be used to refer to the address of a memory block in memory. As illustrated in FIG. 5, the pointer 500, in order to map a memory block into a cache, is partitioned into the following fields: P-tag, P-index, and P-offset. Here, the leading "P" is the shorthand for "pointer".

The P-offset field (which also may be referred to as the block offset or, more generally, the offset) includes the K least significant bits of the pointer 500, which are used to identify which bytes inside a cache line are to be accessed. Assuming the size of a cache line block is Q bytes, then *K* = *log*₂(*Q*) bits in the P-offset field. Herein, unless indicated otherwise, these K bits are denoted as P-offset.

The P-index field (which also may be referred to more generally as the index) includes the M next least significant bits of the pointer 500, which are used to identify the set Si in the cache. For a cache consisting of *S* sets, *M = log*₂(*S*) bits are needed in the P-index field. Herein, unless indicated otherwise, these M bits are denoted as P-index.

The P-tag field includes the remaining bits of the pointer 500. Herein, unless indicated otherwise, these bits are denoted as P-tag.

Different memory blocks can map to the same set Si in the cache (they have the same P-index due to overlapping M bits), so a mechanism is needed to reverse-map P-indexes to pointers. The tag array serves this purpose. The tag array has the same logical organization as the data array (same number of sets S and associativity N). For each cache line in the data array, the tag array holds some metadata: the P-tag bits and the state of the cache line (valid, etc.).

To lookup a pointer, a set S*i* in both the data array and the tag array is accessed using the P-index part, but, to know if a cache line within the set corresponds to the given pointer, the P-tag bits must match to an entry in the set Si in the tag array. If the P-tag bits of the *j*-th entry in the set S*i* match, then the correct data is in the *j*-th cache line of the corresponding data array in the set S*i* (this is called a "cache hit"). If no P-tags in the set Si match in the tag array, then the requested cache line does not reside in the cache (this is a "cache miss"). In the case of a cache miss, a request to the higher levels of the memory hierarchy may be issued and the processor will wait for the cache line to be installed in the cache before the access can proceed.

As an example, consider an 8-way associative cache with 64 sets with a cache line size of 64B. Then, each cache line would hold a memory block of size 64B. Here K=6 and M=6. If the processor tries to access an instruction at IP 0xf045 (tag = 0x1e, index = 0x1, offset = 0x5), then the processor looks for the cache line in set 1 bearing the tag 0x1e. If the cache line is found, then the fifth byte in the cache line is retrieved.

The access to the tag array and data array can occur serially or in parallel. In FIG. 4, a whole set is read from the data array while the tag array is accessed. The address is compared with the P-tag entries to determine in which cache line of the set reside the data that needs to be accessed. This information is fed to a multiplexer at the output of the data array (the way multiplexer) that chooses one of the cache lines (or ways) of the set. Finally, the offset part of the address is used to extract the appropriate bytes from the chosen cache line (this process is called *data alignment*)*.*

The number of bits in the P-offset field determines the size of a cache line, i.e., the size of a cache line is log₂(*number of bits in P-offset field*)*.* The set in the cache is selected based on P-index and a cache line within the set (i.e., a way in the set) is tagged with the P-tag. In the example in FIG. 4, P-offset is 4-bits, P-index is 4 bits, and P-tag is 8-bits and, thus, for the exemplary cache line, P-tag = 0xFF and P-index = 0x0. Thus, the cache line is tagged with 0xFF in the set 0. As is evident, all instructions with cache line share the same P-tag and P-index.

In general, the design of a cache with the paradigm of FIG. 4 enables a simple and efficient of the cache in hardware and, thus, this design is the foundation of most caches found in processors. For example, when a memory block is to be stored in an N-way set associative cache, the memory block is first mapped to set Si based on the P-index bits of the pointer of the memory block. Then, the operations can be grouped into following steps: (1) each of the N entries (ways or cache lines) in Si of the tag array is looked up to see if an entry is empty (unused); if an empty entry is found then the memory block is stored in that entry, otherwise the method proceeds to step (2), (2) if all N entries of the set Si are in use then a second pass is made over the entries in set Si of the tag array to select an entry for eviction, (3) the selected entry is evicted, and (4) the memory block is stored into the selected entry (meaning that the entry in the tag array stores the P-tag of the memory block and the memory block is stored in the corresponding entry in the data array). It is noted that, if none of the N entries in set Si are empty, then step (1) above is a significant waste of clock cycles and power as this step requires each entry in Si of the tag array to be looked up only to eventually find that none of the entries are empty. Additionally, when cache lines are continually "thrashed" due to "conflict misses" then such waste of cycles and power multiply on every miss.

In general, a cache will suffer from conflict misses when Q number of frequently accessed memory blocks map to the same set Si, and the cache associativity N is less than Q. In that case, one of the valid cache lines in the set Si needs to be evicted to accommodate a newer memory block. When the evicted memory block is required by the processor again, then it will be a miss and will need to be fetched back to the cache. To make room for the memory block again, another cache line may need to be evicted and the pattern continues. This pattern is called thrashing of cache lines. For example, thrashing is frequently encountered in high bandwidth packet processing in a router when a pool of packet buffers is recirculated to process all incoming packets (e.g., every new packet is always a miss in the cache until the packet buffer is stored into the cache, and it is very likely that the set in the cache to which the packet buffer maps is full). This, again, is a significant waste of clock cycles and power as this step requires each entry in Si of the tag array to be looked up only to eventually find that none of the entries are empty.

Various example embodiments may be configured to support more efficient operation of an N-way set associative cache based on use of occupancy state information. Various example embodiments for supporting operation of an N-way set associative cache based on occupancy state information may be configured to maintain occupancy state information for a set of the N-way set associative cache to support more efficient memory operations on the set of the N-way set associative cache.

Various example embodiments for supporting operation of an N-way set associative cache based on occupancy state information may be configured to support a memory operation for a memory block based on occupancy state information by maintaining occupancy state information for a set and performing the memory operation for the memory block based on the occupancy state information. The memory operation may be a write operation or a read operation. The occupancy state information for the set may include various types of occupancy state information which may be used for supporting more efficient memory operations, which may vary for different memory operations. For example, the occupancy state information for a set may include information indicative as to whether the set is full (e.g., a full-bit which may be set in a manner indicative as to whether or not the set is full, an indication of a number of ways of the set that are currently occupied, an indication of a number of ways of the set that are currently empty, or the like, as well as various combinations thereof). For example, the occupancy state information for the set may include information indicative as to whether the set is empty (e.g., an empty-bit which may be set in a manner indicative as to whether or not the set is empty, an indication of a number of ways of the set that are currently empty, an indication of a number of ways of the set that are currently occupied, or the like, as well as various combinations thereof). It will be appreciated that various other types of occupancy state information may be supported for enabling more efficient memory operations on an N-way set associative cache.

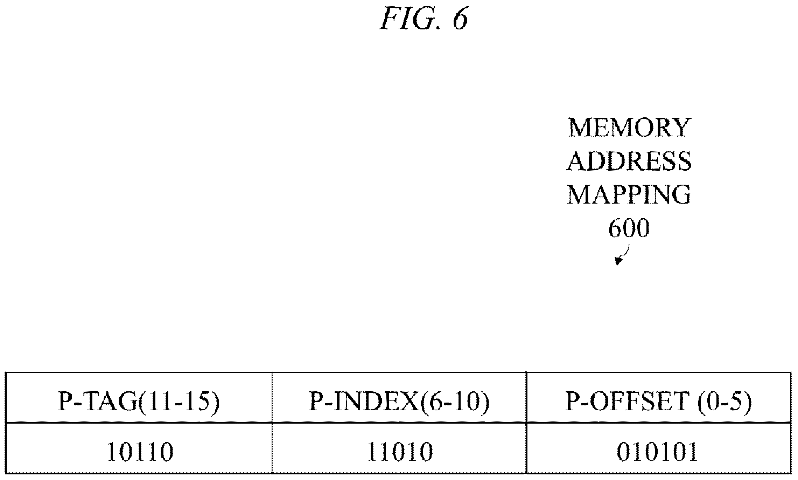

Various example embodiments for supporting operation of an N-way set associative cache based on occupancy state information may be configured to support a write operation for a memory block based on occupancy state information. The occupancy state information maintained by the N-way set associative cache for a set may be indicative as to whether at least one of the ways of the set is empty, and may be used by the N-way set associative cache to support more efficient writing of memory blocks to the set (e.g., by checking the occupancy state information before scanning each of the ways of the set to find an empty cache line such that an eviction procedure may be initiated when the set is full without having to first scan each of the ways of the set in order to determine that the set is full). The occupancy state information for the set may be a full-bit (F-bit) which may be set in a manner indicative as to whether the set is full (e.g., F-bit=1) or not full (e.g., F-bit=0), although it will be appreciated that other types of occupancy state information also or alternative may be maintained and used for the set of the N-way set associative cache (e.g., a counter indicative of a quantity of ways that are full, a counter indicative of a quantity of ways that are empty, or the like, as well as various combinations thereof). The occupancy state information may be used to prevent a way-by-way search to find an empty way of the set for a write operation where the occupancy state information of the set is indicative that the set is full. It will be appreciated that at least some such embodiments may be further understood by way of reference to the examples of FIGs. 6 - 9.

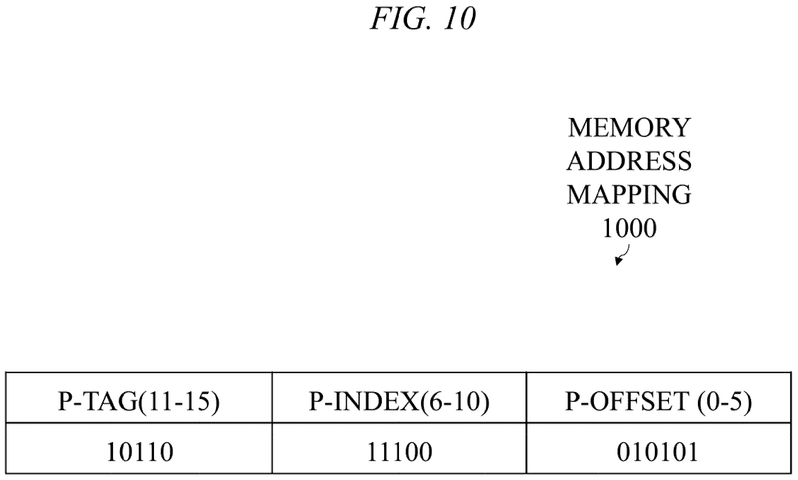

Various example embodiments for supporting operation of an N-way set associative cache based on occupancy state information may be configured to support a read operation for a memory block based on occupancy state information. The occupancy state information maintained by the N-way set associative cache for a set may be indicative as to whether at least one of the ways of the set is occupied, and may be used by the N-way set associative cache to support more efficient reading of memory blocks from the set (e.g., by checking the occupancy state information before scanning the set to find a way that may be storing the memory block, to determine whether the set of the cache is empty such that there is no need to search each of the ways to determine whether the memory block is stored in the set). The occupancy state information for the set may be an empty-bit (E-bit) which may be set in a manner indicative as to whether the set is empty (e.g., E-bit=1) or not empty (e.g., E-bit=0), although it will be appreciated that other types of occupancy state information also or alternative may be maintained and used for the set of the N-way set associative cache (e.g., a counter indicative of a quantity of ways that are empty, a counter indicative of a quantity of ways that are occupied, or the like, as well as various combinations thereof). The occupancy state information may be used to prevent a way-by-way search to find data element stored in the set for a read operation where the occupancy state information of the set is indicative that the set is empty. It will be appreciated that at least some such embodiments may be further understood by way of reference to the examples of FIGs. 10 - 13.

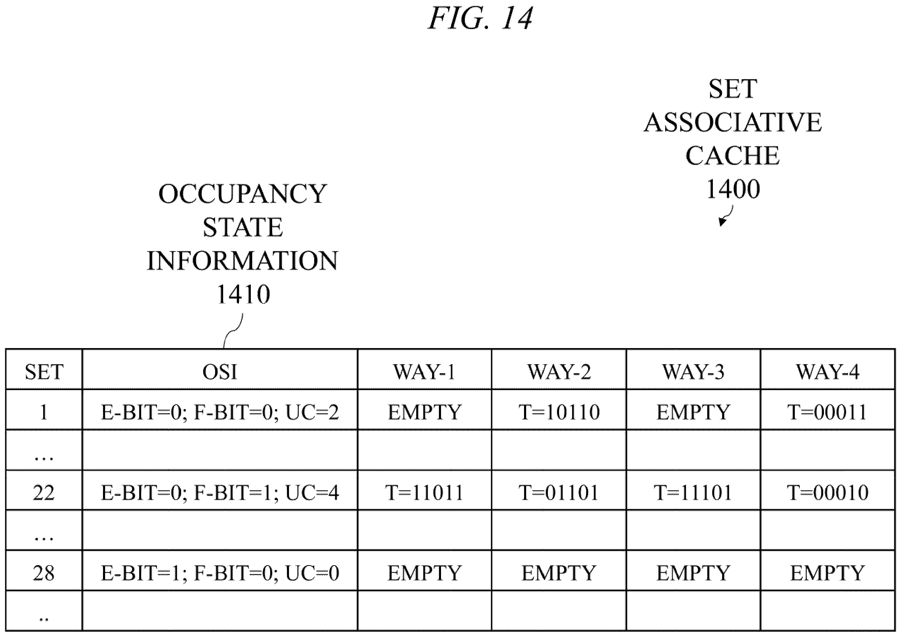

It will be appreciated that use of occupancy state information to support more efficient memory operations for an N-way set associative cache may be further understood by way of reference to the example embodiments of FIGs. 14 - 20.

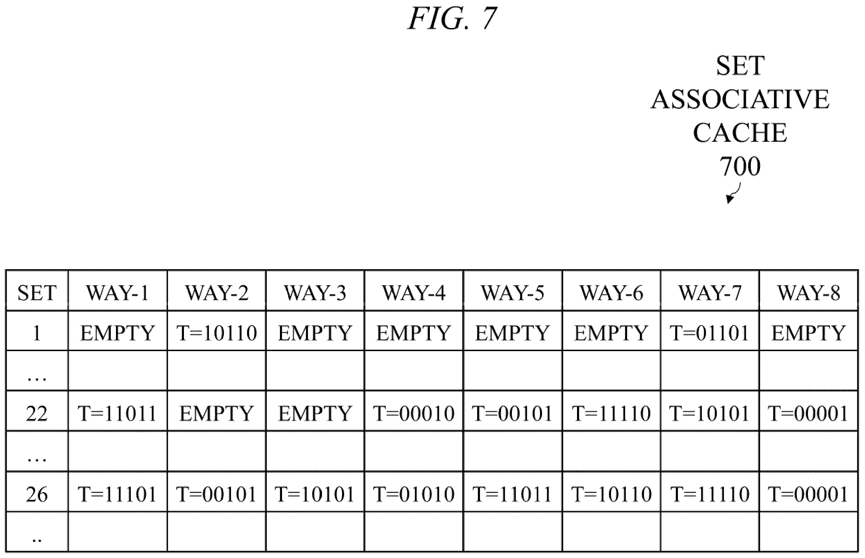

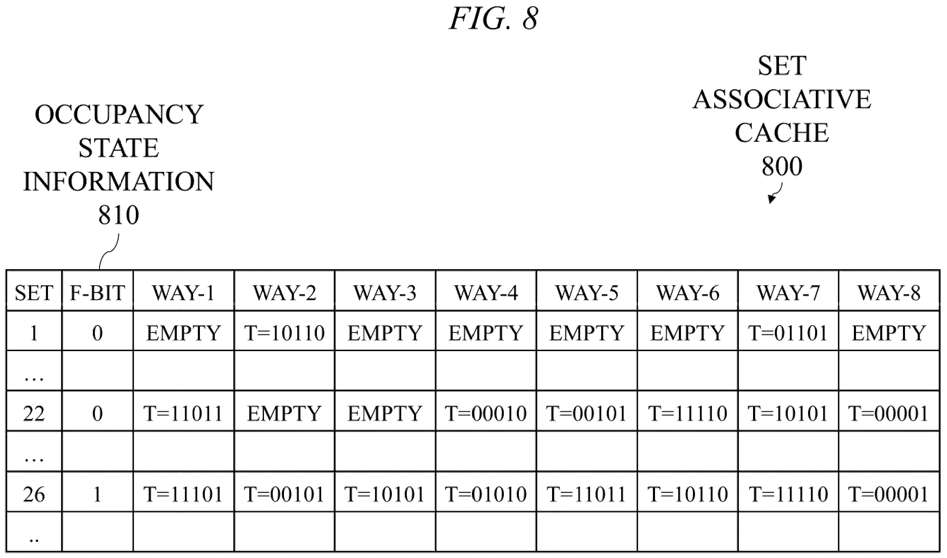

FIG. 6 depicts an example embodiment of P-tag, P-index, and P-offset mappings of an address of a memory block to be stored in a cache based on a write operation. In this example, assume that the 16-bit memory block with address 1011011010010101 needs to be stored in an 8-way set associative cache (N = 8). Also, assume that the size of a cache line is 64B and there are 32 sets in the 8-way set associative cache. It is noted that the bit positions start from zero to higher from right to left. Additionally, assume that the P-tag, P-index, and P-offset mappings of an address of a memory block are as shown in FIG. 6. As illustrated in the memory address mapping 600 of FIG. 6, Bits 0-5 (P-offset) are used for indexing an offset in a 64B cache line, Bits 6-10 (P-index) are used for indexing one of the 32 sets in the cache, and Bits 11-15 are used as P-tag. The set is determined by the P-index bits 11010, which maps to set 26. The storage of the memory block into the 8-way set associative cache is presented for the case in which occupancy state information is not maintained by the 8-way set associative cache (as presented with respect to FIG. 7) and for the case in which occupancy state information is maintained by the 8-way set associative cache (as presented with to FIG. 8).

FIG. 7 depicts an example embodiment of a set associative cache before storing a memory block where occupancy state information is not supported. In the set associative cache 700 of FIG. 7, only a few of the sets are shown (for purposes of clarity) and "T" means the Tag bits from the address of the memory block are used for the indexing mode. As illustrated in the memory address mapping 600 of FIG. 6, Bits 0-5 (P-offset) are used for indexing an offset in a 64B cache line, Bits 6-10 (P-index) are used for indexing one of the 32 sets in the cache, and Bits 11-15 are used as P-tag, so a determination is made that the P-index bits 11010 map to set 26 such that the set associative cache 700 will store the memory block in one of the ways of set 26. In the set associative cache 700, without the occupancy state information, the set associative cache 700 will have to scan each of the eight ways of set 26 in order to determine that none of the eight ways are empty and, thus, that the set associative cache 700 will have to evict one of the cache lines from one of the ways of set 26 in order to make room to store the memory block.

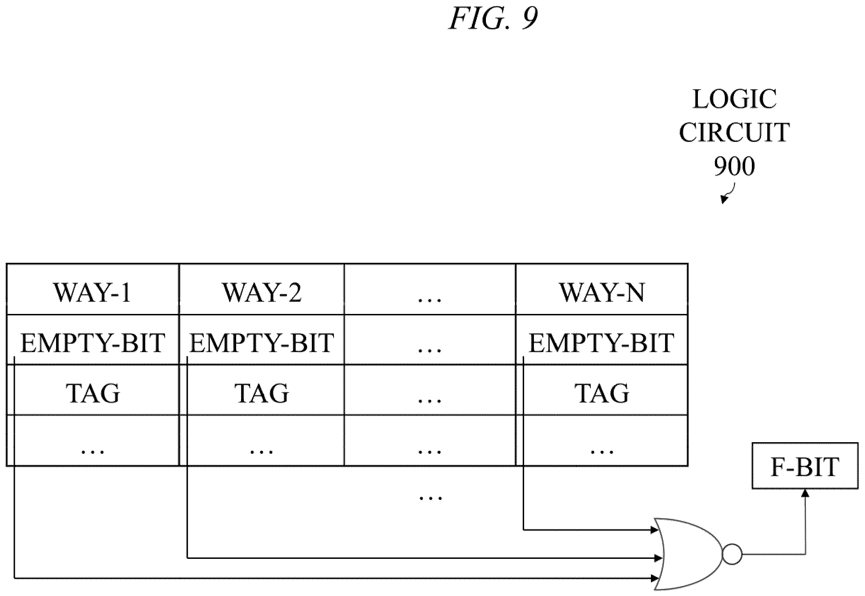

FIG. 8 depicts an example embodiment of a set associative cache before storing a memory block where occupancy state information is supported. In the set associative cache 800 of FIG. 8, only a few of the sets are shown (for purposes of clarity) and "T" means the Tag bits from the address of the memory block are used for the indexing mode. As illustrated in the memory address mapping 600 of FIG. 6, Bits 0-5 (P-offset) are used for indexing an offset in a 64B cache line, Bits 6-10 (P-index) are used for indexing one of the 32 sets in the cache, and Bits 11-15 are used as P-tag, so a determination is made that the P-index bits 11010 map to set 26 such that the set associative cache 800 will store the memory block in one of the ways of set 26. As depicted in FIG. 8, the set associative cache 800 includes occupancy state information 810 in the form of an array of full-bits (F-bits) maintained for the sets, respectively, where the F-bit maintained for a given set is indicative as to whether the given set is full (i.e., whether all of the ways of the given set are full). In the example of FIG. 8, the F-bit for sets 1 and 22 are set to "0" because these sets are not full (i.e. each has at least one way that is empty), whereas the F-bit for set 26 is set to "1" because this set is full (i.e., each of the ways of the set is occupied). In the set associative cache 800, with the occupancy state information 810, the set associative cache 800 will not have to scan each of the eight ways of set 26 in order to determine that set 26 is full; rather, the set associative cache 800 can initiate an eviction procedure after using the occupancy state information 810 (i.e., F-bit = 1 for set 26) to determine that set 26 is full (thereby saving clock cycles and processor resources). The set associative cache 800, based on the eviction procedure, will evict one of the cache lines from one of the ways of the set 26 in order to make room to store the memory block. It will be appreciated that the F-bits may be determined for the sets using various types of logic circuits, an example of which is presented with respect to FIG. 9.

FIG. 9 depicts an example embodiment of a logic circuit configured to determine a full-bit to be used as occupancy state information for a write operation. As depicted in FIG. 9, the logic circuit 900 may be used for a particular set of a set-associative cache in order to automatically turn the F-bit OFF and ON based on the EMPTY-BITs from each of the cache lines in the set. For example, as illustrated in FIG. 9, the EMPTY-BITs from each of the cache lines in the set may be input into a NOR gate such that the F-bit is set to OFF as long as at least one of the EMPTY-BITs of the cache lines is set to true (i.e., EMPTY-BIT = 1) and is set to ON when all of the EMPTY-BITs of the cache lines are set to false (i.e., EMPTY-BIT = 0). It will be appreciated that the logic circuit 900 is merely one implementation of logic circuitry for setting an F-bit for a set. For example, in at least some example embodiments (which are omitted for purposes of clarity), the F-bit for a set may be automatically turned OFF and ON by inputting FULL-BITs from each of the cache lines in the set to an AND gate (i.e., when all cache lines are full then the set is indicated as full with F-bit = 1).

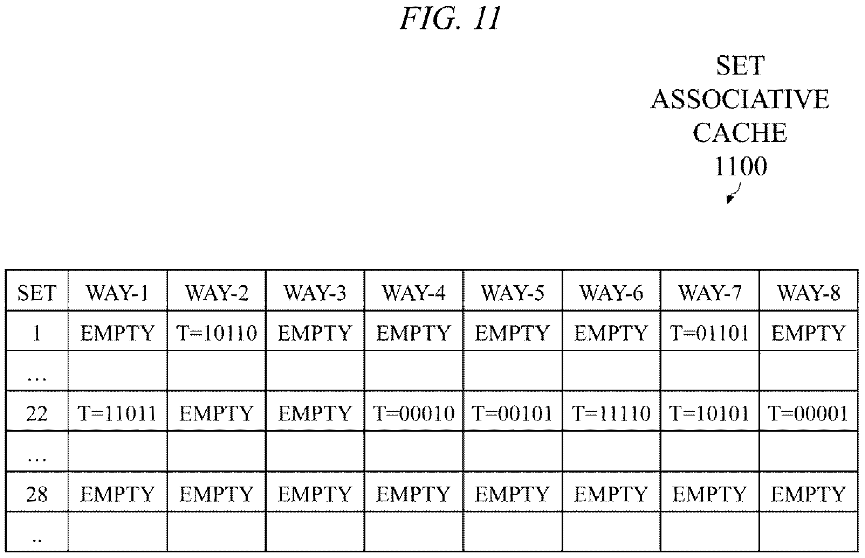

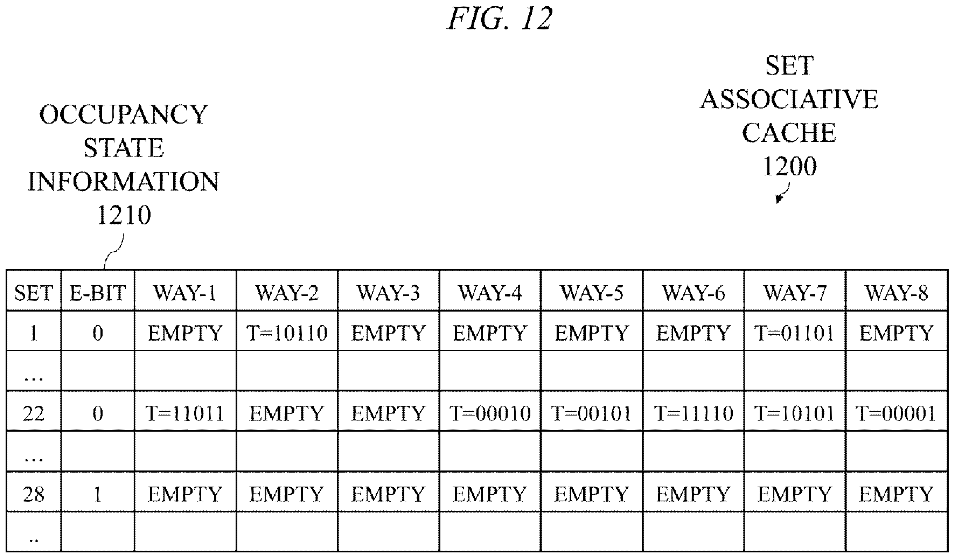

FIG. 10 depicts an example embodiment of P-tag, P-index, and P-offset mappings of an address of a memory block to be read from a cache based on a read operation. In this example, assume that the 16-bit memory block with address 1011011100010101 needs to be read from an 8-way set associative cache (N = 8). Also, assume that the size of a cache line is 64B and there are 32 sets in the 8-way set associative cache. It is noted that the bit positions start from zero to higher from right to left. Additionally, assume that the P-tag, P-index, and P-offset mappings of an address of a memory block are as shown in FIG. 10. As illustrated in the memory address mapping 1000 of FIG. 10, Bits 0-5 (P-offset) are used for indexing an offset in a 64B cache line, Bits 6-10 (P-index) are used for indexing one of the 32 sets in the cache, and Bits 11-15 are used as P-tag. The set is determined by the P-index bits 11100, which maps to set 28. The reading of the memory block from the 8-way set associative cache is presented for the case in which occupancy state information is not maintained by the 8-way set associative cache (as presented with respect to FIG. 11) and for the case in which occupancy state information is maintained by the 8-way set associative cache (as presented with to FIG. 12).

FIG. 11 depicts an example embodiment of a set associative cache before reading a memory block where occupancy state information is not supported. In the set associative cache 1100 of FIG. 11, only a few of the sets are shown (for purposes of clarity) and "T" means the Tag bits from the address of the memory block. As illustrated in the memory address mapping 1000 of FIG. 10, Bits 0-5 (P-offset) are used for indexing an offset in a 64B cache line, Bits 6-10 (P-index) are used for indexing one of the 32 sets in the cache, and Bits 11-15 are used as P-tag, so a determination is made that the P-index bits 11100 map to set 28 such that the set associative cache 1100 will attempt to read the memory block from one of the ways of set 28. In the set associative cache 1100, without the occupancy state information, the set associative cache 1100 will have to scan each of the eight ways of set 28 in order to determine that none of the eight ways are full and, thus, that the memory block is not accessible from any of the ways of set 28 and the set associative cache 1100 will need to obtain the memory block from the next level of the memory hierarchy.

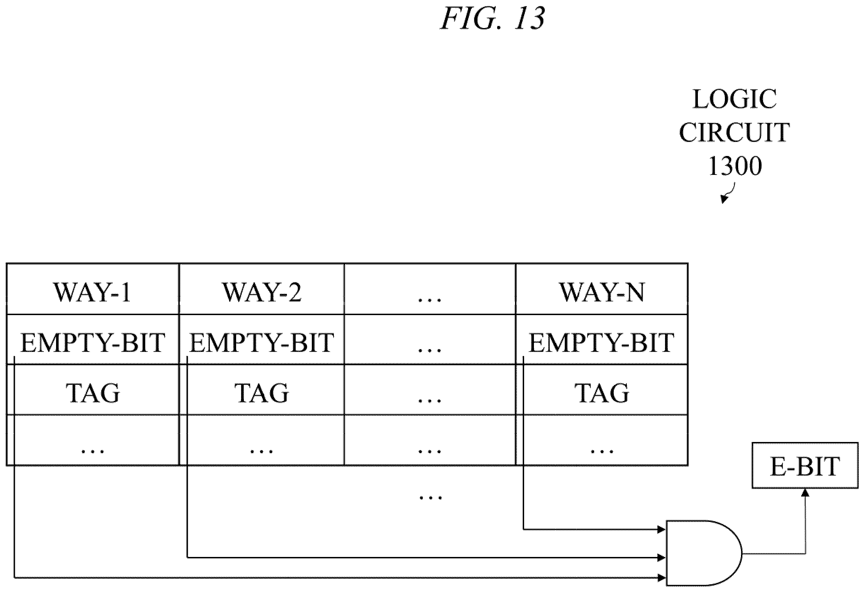

FIG. 12 depicts an example embodiment of a set associative cache before reading a memory block where occupancy state information is supported. In the set associative cache 1200 of FIG. 12, only a few of the sets are shown (for purposes of clarity) and "T" means the Tag bits from the address of the memory block. As illustrated in the memory address mapping 1000 of FIG. 10, Bits 0-5 (P-offset) are used for indexing an offset in a 64B cache line, Bits 6-10 (P-index) are used for indexing one of the 32 sets in the cache, and Bits 11-15 are used as P-tag, so a determination is made that the P-index bits 11100 map to set 28 such that the set associative cache 1200 will attempt to read the memory block from one of the ways of set 28. As depicted in FIG. 12, the set associative cache 1200 includes occupancy state information 1210 in the form of an array of empty-bits (E-bits) maintained for the sets, respectively, where the E-bit maintained for a given set is indicative as to whether the given set is empty (i.e., whether all of the ways of the given set are empty). In the example of FIG. 12, the E-bit for sets 1 and 22 are set to "0" because these sets are not empty (i.e. each has at least one way that is full), whereas the E-bit for set 29 is set to "1" because this set is empty (i.e., none of the ways of the set is occupied). In the set associative cache 1200, with the occupancy state information 1210, the set associative cache 1200 will not have to scan each of the eight ways of set 26 in order to determine that set 28 is empty; rather, the set associative cache 1200 can initiate retrieval of the memory block from a next layer of the memory hierarchy after using the occupancy state information 1210 (i.e., E-bit = 1 for set 28) to determine that set 28 is full (thereby saving clock cycles and processor resources). It will be appreciated that the E-bits may be determined for the sets using various types of logic circuits, an example of which is presented with respect to FIG. 13.

FIG. 13 depicts an example embodiment of a logic circuit configured to determine an empty-bit to be used as occupancy state information for a read operation. As depicted in FIG. 13, the logic circuit 1300 may be used for a particular set of a set-associative cache in order to automatically turn the E-bit OFF and ON based on the EMPTY-BITs from each of the cache lines in the set. For example, as illustrated in FIG. 13, the EMPTY-BITs from each of the cache lines in the set may be input into an AND gate such that the E-bit is set to OFF as long as at least one of the EMPTY-BITs of the cache lines is set to false (i.e., EMPTY-BIT = 0) and is set to ON when all of the EMPTY-BITs of the cache lines are set to true (i.e., EMPTY-BIT = 1). It will be appreciated that the logic circuit 1300 is merely one implementation of logic circuitry for setting an E-bit for a set. For example, in at least some example embodiments (which are omitted for purposes of clarity), the E-bit for a set may be automatically turned OFF and ON by inputting FULL-BITs from each of the cache lines in the set to an NOR gate (i.e., when all cache lines are empty then the set is indicated as empty with E-bit = 1).

It will be appreciated that, although primarily presented with respect to example embodiments in which the occupancy state information includes a full-bit (as presented with respect to FIGs. 6 - 9) or an empty-bit (as presented with respect to FIGs. 10 - 13), various combinations of such occupancy state information may be maintained and used to support, various other types of occupancy state information may be maintained and used to support memory operations, or the like, as well as various combinations thereof. This is represented by the example embodiment of FIG. 14.

FIG. 14 depicts an example embodiment of a set associative cache including occupancy state information.

As depicted in FIG. 14, in the set associative cache 1400 of FIG. 14, only a few of the sets are shown (for purposes of clarity) and "T" means Tag bits from addresses of memory blocks are used for the indexing mode. It is noted that, for purposes of clarity, it is assumed that the set associative cache 1400 is a 4-way set associative cache. It will be appreciated that, more generally, an N-way set associative cache may include fewer or more ways and may include fewer or more sets. The intersections of the sets and ways represent cache lines which are configured to store memory blocks and which may currently be storing memory blocks (as indicated by "T=" and, thus, which may be considered to be full) or which may not currently be storing memory blocks (as indicated by "EMPTY" and, thus, which may considered to be empty).

As depicted in FIG. 14, the set associative cache 1400 includes occupancy state information 1410 which includes, for each of the sets, respective occupancy state information for the respective set (which, for a given set, also may be referred to as set occupancy state information for the set). The occupancy state information maintained for a set is indicative of an occupancy of the set and may include one or more types of occupancy state information. For example, the occupancy state information maintained for a set may include one or more of a full-bit (F-bit) indicative as to whether the set is full (i.e., all ways are full), an empty-bit (E-bit) indicative as to whether the set is empty (i.e., all ways of the set are empty), a full counter (FC) value indicative of a quantity of ways of the set that are occupied, an empty counter (EC) value indicative of a quantity of ways of the set that are empty, a utilization counter (UC) value which may be indicative of the quantity of ways of the set that are empty or the quantity of ways of the set that are full, or the like, as well as various combinations thereof). It will be appreciated that various other types of occupancy state information may be maintained by the set associative cache 1400.

As depicted in FIG. 14, for purposes of clarity, the set associative cache 1400 is depicted as maintaining occupancy state information that includes an F-bit, an E-bit, and a UC value indicative of a quantity of ways that are occupied. As illustrated with respect to set 1, two of the four ways are occupied, so the E-BIT is set to zero, the F-BIT is set to zero, and the UC value is set to 2 since two of the ways are storing memory blocks. As illustrated with respect to set 22, all four of the ways are occupied, so the E-BIT is set to zero, the F-BIT is set to one, and the UC value is set to 4 since all four of the ways are storing memory blocks. As illustrated with respect to set 28, all four of the ways are empty, so the E-BIT is set to one, the F-BIT is set to zero, and the UC value is set to 0 since none of the ways are storing memory blocks.

It will be appreciated that, although primarily presented with respect to an example embodiment in which the same types of occupancy state information are maintained for each set, in at least some example embodiments different types of set occupancy state information may be maintained for different sets.

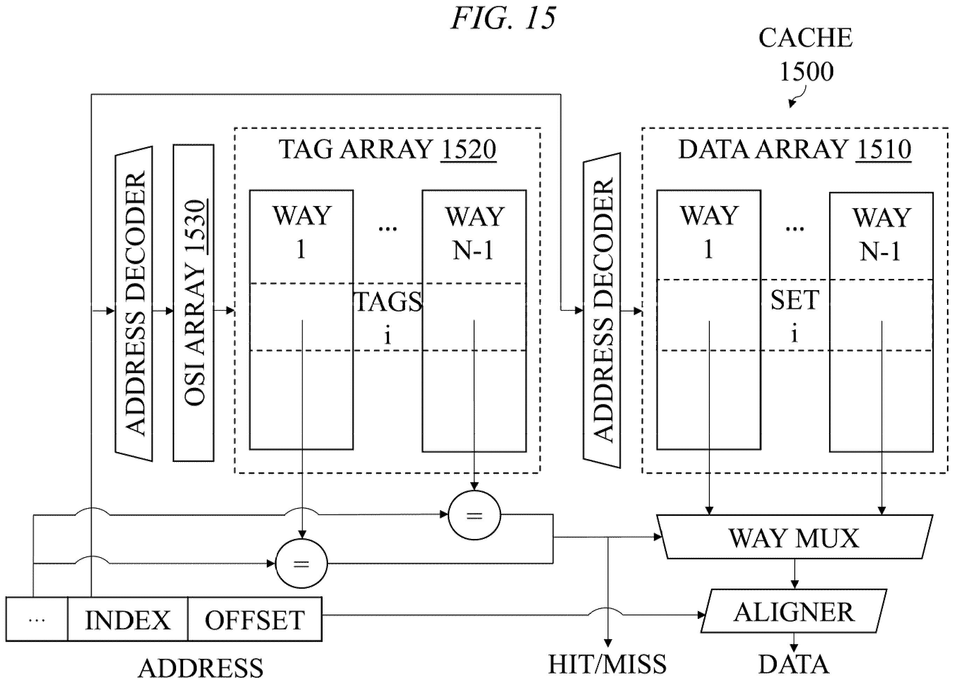

FIG. 15 depicts an example embodiment of an N-way set associative cache configured to support use of occupancy state information.

As illustrated in FIG. 15, the N-way set associative cache 1500 includes two main building blocks: a data array 1510 and a tag array 1520. The N-way set associative cache 1500 also includes an occupancy state information (OSI) array 1530 which is configured to maintain occupancy state information which may be used for improving memory operations executed on the N-way set associative cache 1500.

In the N-way set associative cache 1500, the data array 1510 stores the cache lines, while the tag array 1520 is used in order to match pointers into data array entries. The data array 410 is logically organized as a group of S number of sets. Each set consists of N number of cache lines. The number of cache lines in a set is called the "degree of associativity" of the cache. It is noted that a cache of associativity N is an N-way associative cache, where each way is a cache line. A memory block is first mapped into a set Si by its pointer and then placed into any cache line Nj in the set Si.

In the N-way set associative cache 1500, to look up a pointer, a set Si in both the data array 1510 and the tag array 1520 is accessed using the P-index part. The selection of Si is done by the Address Decoder circuitry that activates the access to Si. The OSI array 1530 maintains occupancy state information per set (e.g., one or more of an F-bit, an E-bit, an occupancy counter value, or the like, as well as various combinations thereof). For a memory operation to be performed on a set, the OSI array 1530 is accessed to determine the occupancy state information for the set before scanning through the cache lines of the set for performing the memory operation as the occupancy state information may provide an indication that scanning of the cache lines of the set is not needed (e.g., initiating an eviction action without scanning the cache lines of the set during a write operation where the occupancy state information for the set is indicative that the set is full or initiating a retrieval operation at a next level of the memory hierarchy without scanning the cache lines of the set during a read operation where the occupancy state information for the set is indicative that the set is empty).

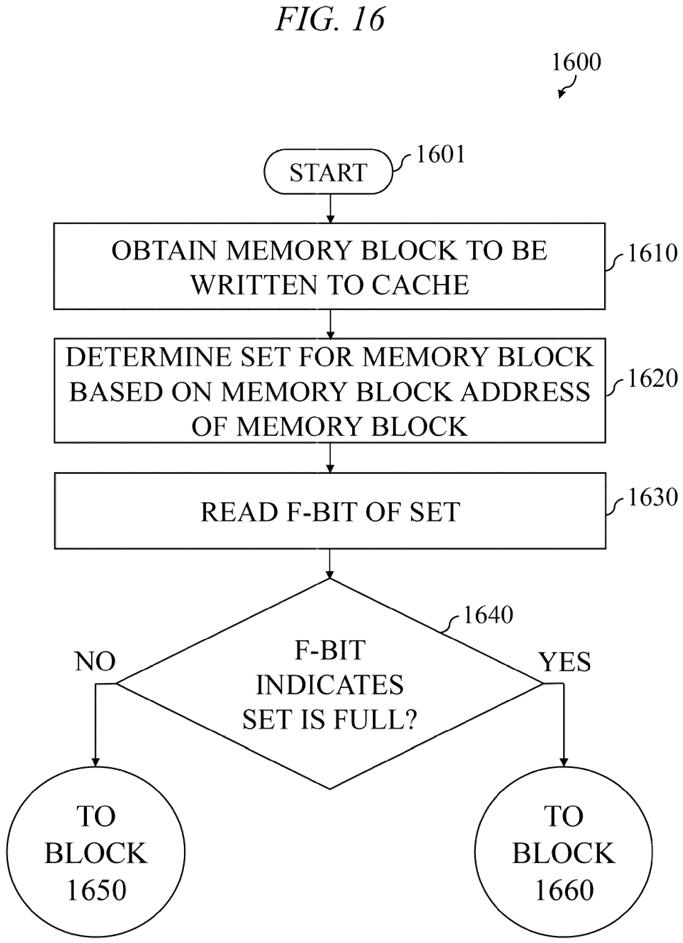

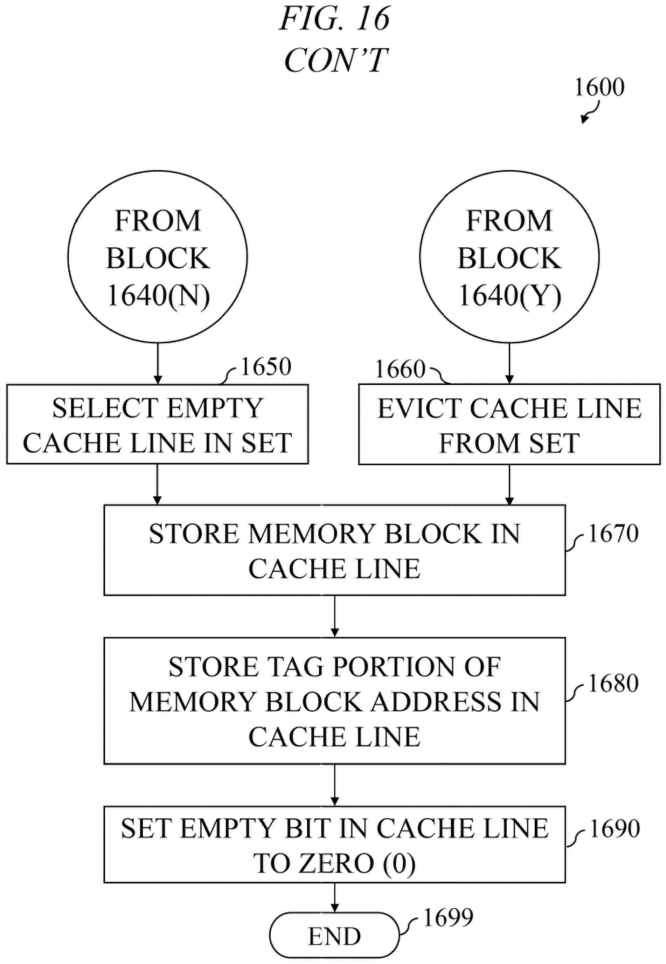

FIG. 16 depicts an example embodiment of method for storing a memory block into a set associative cache supporting occupancy state information. It will be appreciated that, although primarily presented herein as being performed serially, at least a portion of the functions of method 1600 may be performed contemporaneously or in a different order than as presented in FIG. 16. It will be appreciated that, although primarily presented with respect to an example embodiment in which the occupancy state information is a full-bit (F-bit) indicative as to whether the set is full, various other types of occupancy state information may be used within the context of the method 1600 of FIG. 16. At block 1601, the method 1600 begins. At block 1610, the memory block to be written to the cache is obtained, and then the method 1600 proceeds to block 1620. At block 1620, the set for the memory block is determined based on the memory block address of the memory block, and then the method 1600 proceeds to block 1630. At block 1630, the F-bit of the set is read to determine whether the set is full, and then the method 1600 proceeds to block 1640. At block 1640, a determination is made as to whether the F-bit indicates that the set is full. If the F-bit indicates that the set is not full, the method 1600 proceeds to block 1650. If the F-bit indicates that the set is full, the method 1600 proceeds to block 1660. At block 1650, an empty cache line in the set is selected, and then the method 1600 proceeds to block 1670. At block 1660, a cache line is evicted from the set, and then the method 1600 proceeds to block 1670. At block 1670, the memory block is stored in the cache line (namely, the empty cache line from block 1650 or the evicted cache line from block 1660). At block 1680, the tag portion of the memory block address is stored in the cache line. At block 1690, the empty-bit for the cache line is set to zero (and the F-bit for the set will be automatically set based on the empty-bits of the cache lines of the set). At block 1699, the method 1600 ends.

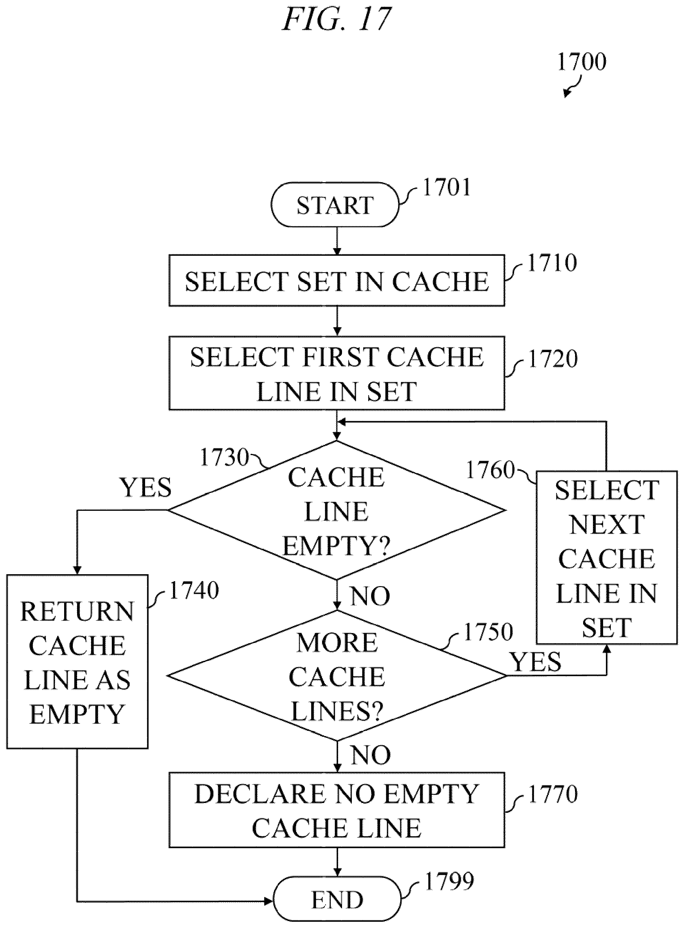

FIG. 17 depicts an example embodiment of a method for finding an empty cache line in a set associative cache, for use in conjunction with the method of FIG. 16. It will be appreciated that, although primarily presented herein as being performed serially, at least a portion of the functions of method 1700 may be performed contemporaneously or in a different order than as presented in FIG. 17. It will be appreciated that the method 1700 of FIG. 17 may be used to provide the block 1650 of the method 1600 of FIG. 16. At block 1701, the method 1700 begins. At block 1710, a set in a cache is selected, and then the method 1700 proceeds to block 1720. At block 1720, a first cache line in the set is selected, and then the method 1700 proceeds to block 1730. At block 1730, a determination is made as to whether the selected cache line of the selected set is empty. If the selected cache line of the selected set is empty, then the method 1700 proceeds to block 1740. If the selected cache line of the selected set is not empty, then the method 1700 proceeds to block 1750. At block 1740, the cache line is returned as empty, and then the method 1700 proceeds to block 1799 where the method 1700 ends. At block 1750, a determination is made as to whether more cache lines are available (that have not yet been checked to see if they are candidates to store a memory block) since the currently selected cache line is not empty and, thus, cannot be used to store the memory block. If more cache lines are available in the selected set then the method 1700 proceeds to block 1760. If more cache lines are not available in the selected set then the method 1700 proceeds to block 1770. At block 1760, a next cache line in the set is selected (to be checked to determine whether that cache line is empty), and then the method 1700 returns to block 1730 (to determine whether the newly selected cache line is empty). At block 1770, a declaration is made that there is no empty cache line in the set, and then the method 1700 proceeds to block 1799 where the method 1700 ends. At block 1799, the method 1700 ends.

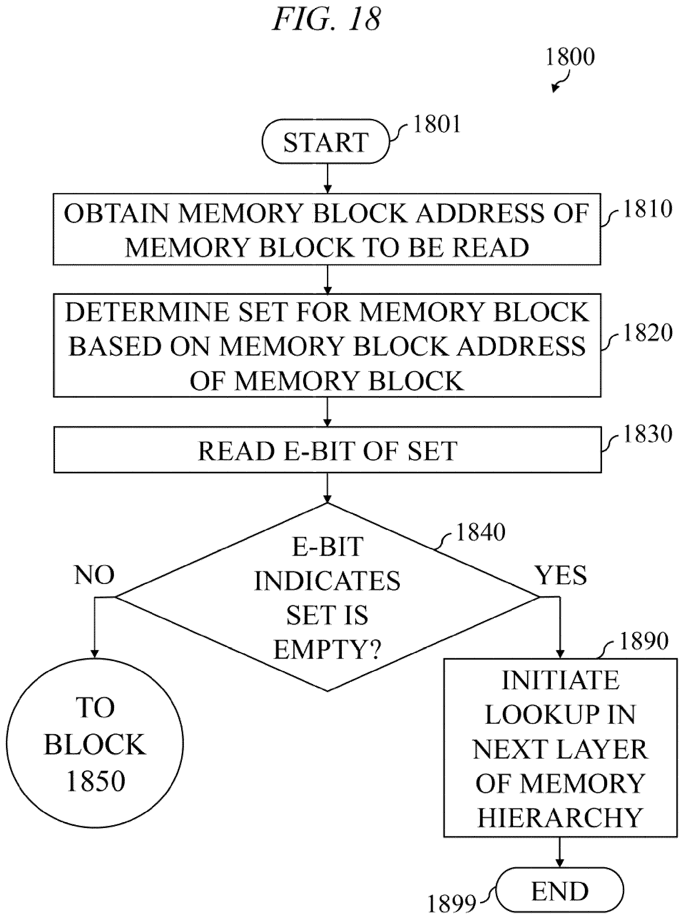

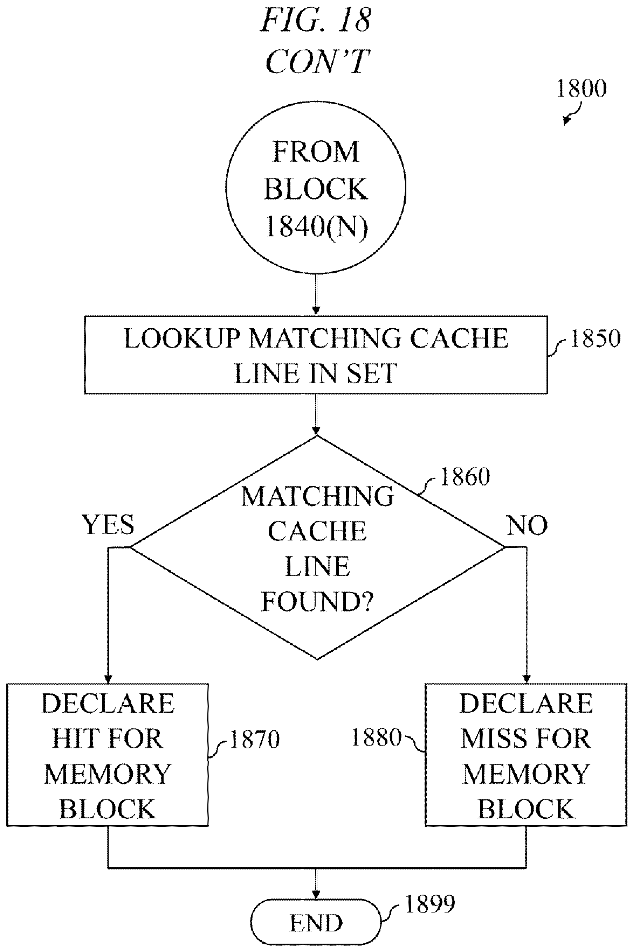

FIG. 18 depicts an example embodiment of method for reading a memory block from a set associative cache supporting occupancy state information. It will be appreciated that, although primarily presented herein as being performed serially, at least a portion of the functions of method 1800 may be performed contemporaneously or in a different order than as presented in FIG. 18. It will be appreciated that, although primarily presented with respect to an example embodiment in which the occupancy state information is an empty-bit (E-bit) indicative as to whether the set is empty, various other types of occupancy state information may be used within the context of the method 1800 of FIG. 18. At block 1801, the method 1800 begins. At block 1810, the memory block address of the memory block to be read is obtained, and then the method 1800 proceeds to block 1820. At block 1820, the set for the memory block is determined based on the memory block address of the memory block, and then the method 1800 proceeds to block 1830. At block 1830, the E-bit of the set is read to determine whether the set is empty, and then the method 1800 proceeds to block 1840. At block 1840, a determination is made as to whether the E-bit indicates that the set is empty. If the E-bit indicates that the set is not empty, the method 1800 proceeds to block 1850. If the E-bit indicates that the set is empty, the method 1800 proceeds to block 1890. At block 1850, the cache lines of the set are searched to determine whether a matching cache line is stored within the set (i.e., whether the memory block is stored in a cache line of the set). At block 1860, a determination is made as to whether a matching cache line has been identified in the set based on the searching of the set. If a matching cache line has been identified in the set then the method 1800 proceeds to block 1870. If a matching cache line has not been identified in the set then the method 1800 proceeds to block 1880. At block 1870, a hit is declared for the memory block in the cache, and then the method 1800 proceeds to block 1899 where the method 1800 ends. At block 1880, a miss is declared for the memory block in the cache, and then the method 1800 proceeds to block 1899 where the method 1800 ends. At block 1890, a lookup for the memory block in a next layer of the memory hierarchy is initiated (without having to search each of the cache lines of the set) based on a determination that the set is empty, and then the method 1800 proceeds to block 1899 where the method 1800 ends.

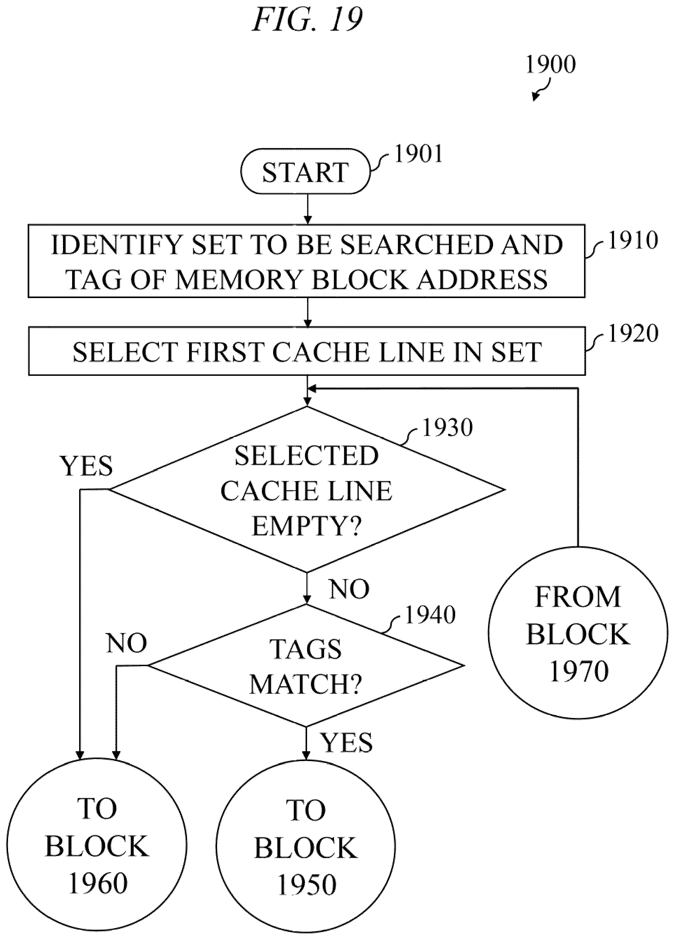

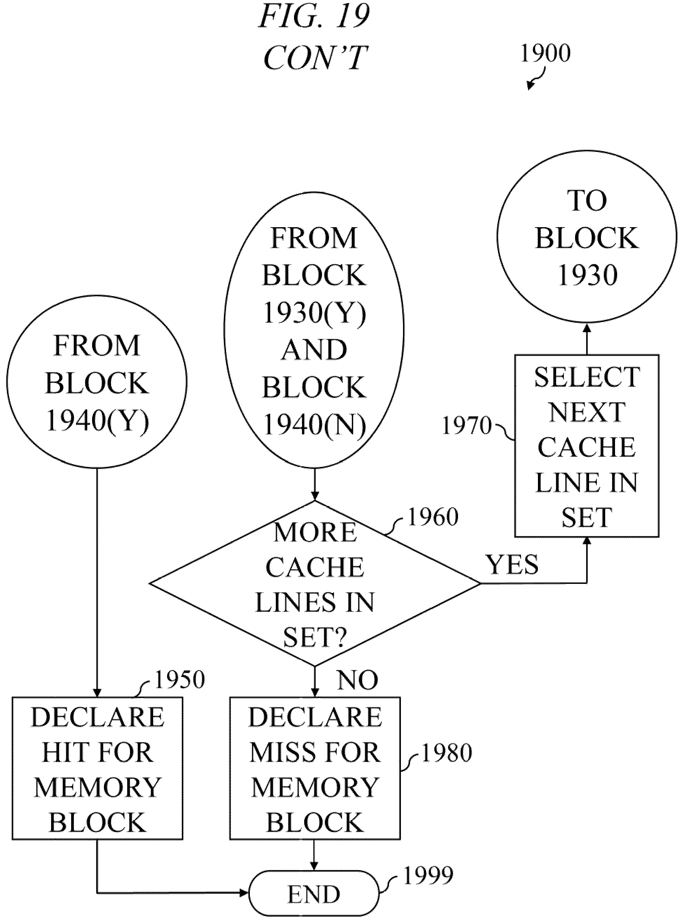

FIG. 19 depicts an example embodiment of a method for finding an empty cache line in a set associative cache, for use in conjunction with the method of FIG. 18. It will be appreciated that, although primarily presented herein as being performed serially, at least a portion of the functions of method 1900 may be performed contemporaneously or in a different order than as presented in FIG. 19. It will be appreciated that the method 1900 of FIG. 19 may be used to provide the block 1850 of the method 1800 of FIG. 18. At block 1901, the method 1900 begins. At block 1910, the set to be searched and the tag of the memory block address to be searched for in the set to be searched are identified, and then the method 1900 proceeds to block 1920. At block 1920, a first cache line in the set is selected, and then the method 1900 proceeds to block 1930. At block 1930, a determination is made as to whether the selected cache line is empty. If the selected cache line is not empty, the method 1900 proceeds to block 1940. If the selected cache line is empty, the method 1900 proceeds to block 1960. At block 1940, a determination is made as to whether the tag from the memory address matches the tag of the selected cache line. If the tag from the memory address matches the tag of the selected cache line, the method 1900 proceeds to block 1950. If the tag from the memory address does not match the tag of the selected cache line, the method 1900 proceeds to block 1960. At block 1950, a hit is declared for the memory block in the selected cache line (since the matching tag was identified), and then the method 1900 proceeds to block 1999 where the method 1900 ends. At block 1960, a determination is made as to whether there are more cache lines in the set (that are available to be searched for the memory block). If there are more cache lines in the set, then the method 1900 proceeds to block 1970. If there are no more cache lines in the set, then the method 1900 proceeds to block 1980. At block 1970, a next cache line in the set is selected (to be searched for the memory block), and then the method 1900 returns to block 1930. At block 1980, a miss is declared for the memory block in the set (since all of the cache lines of the set have been searched without the matching tag being identified), and then the method 1900 proceeds to block 1999 where the method 1900 ends. At block 1999, the method 1900 ends.

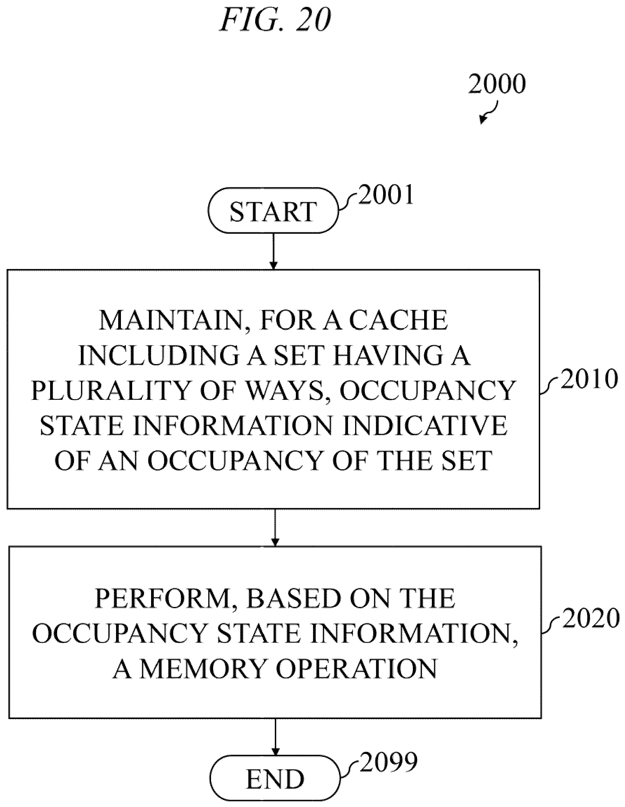

FIG. 20 depicts an example embodiment of a method for operating a cache based on use of occupancy state information. It will be appreciated that, although primarily presented herein as being performed serially, at least a portion of the functions of method 2000 may be performed contemporaneously or in a different order than as presented in FIG. 20. At block 2001, the method 2000 begins. At block 2010, maintain, for a cache including a set having a plurality of ways, occupancy state information indicative of an occupancy of the set. At block 2020, perform, based on the occupancy state information, a memory operation. At block 2099, the method 2000 ends.

Various example embodiments for supporting operation of a processor cache based on occupancy state information as presented herein may be configured to be applied to various types of caches which may be implemented within or otherwise operate in association with processors, such as an instruction cache (IC) of a processor, a micro-operations cache (UC) of a processor, a data cache (DC) of a processor, a unified cache of a processor that can host instructions and data, a branch target buffer (BTB) associated with a branch predictor of a processor, or the like.

Various example embodiments for supporting operation of a processor cache based on occupancy state information as presented herein may be configured to be used within various types of processors which may utilize caches, such as Complex Instruction Set Computer (CISC) processors, Reduced Instruction Set Computer (RISC) processors, or any other types of processors or other devices which may utilize caches.

Various example embodiments for supporting operation of a processor cache based on occupancy state information may provide various advantages or potential advantages. For example, various example embodiments for supporting operation of a processor cache based on occupancy state information may be configured to support more efficient operation of a set associative cache by using the occupancy state information to obviate the need to search the cache lines of a set of the set associative cache under certain conditions (e.g., where the occupancy state information is used to determine that the set is full during a write operation or where the occupancy state information is used to determine that the set is empty during a read operation).

Various example embodiments for supporting operation of a processor cache based on occupancy state information may provide various other advantages or potential advantages.

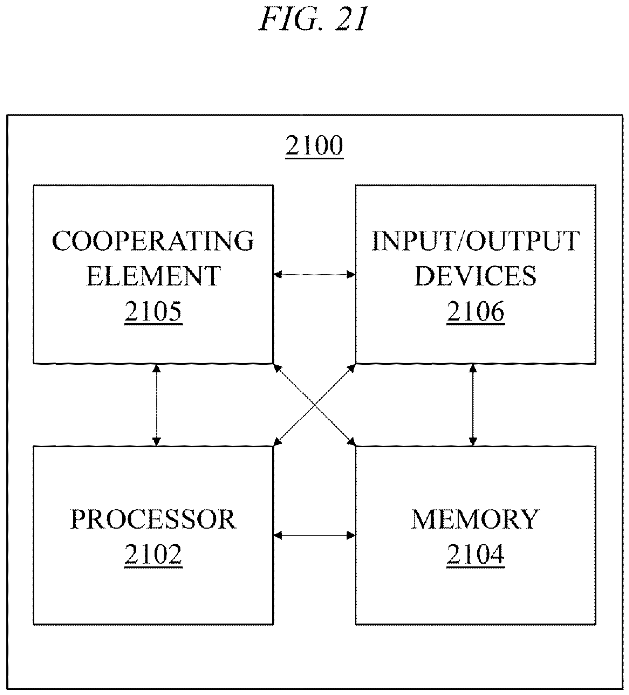

FIG. 21 depicts an example embodiment of a computer suitable for use in performing various functions presented herein.

The computer 2100 includes a processor 2102 (e.g., a central processing unit (CPU), a processor, a processor core of a processor, a subset of processor cores of a processor, a set of processor cores of a processor, or the like) and a memory 2104 (e.g., a random access memory (RAM), a read-only memory (ROM), or the like). In at least some example embodiments, the computer 2100 may include at least one processor and at least one memory storing instructions that, when executed by the at least one processor, cause the computer to perform various functions presented herein.

The computer 2100 also may include a cooperating element 2105. The cooperating element 2105 may be a hardware device. The cooperating element 2105 may be a process that can be loaded into the memory 2104 and executed by the processor 2102 to implement various functions presented herein (in which case, for example, the cooperating element 2105 (including associated data structures) can be stored on a non-transitory computer readable medium, such as a storage device or other suitable type of storage element (e.g., a magnetic drive, an optical drive, or the like)).

The computer 2100 also may include one or more input/output devices 2106. The input/output devices 2106 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 2100 may represent a general architecture and functionality suitable for implementing functional elements described herein, portions of functional elements described herein, or the like, as well as various combinations thereof. For example, computer 2100 may provide a general architecture and functionality that is suitable for implementing one or more elements presented herein.

It will be appreciated that computer 2100 also may represent a general architecture and functionality within which various example embodiments may be implemented (e.g., where the processor 2102 includes a set associative cache configured to support use of occupancy state information).

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus (100), comprising:
a cache (800) including a set having a plurality of ways, wherein the cache (800) is configured to:
maintain, for the set, occupancy state information (810) indicative of an occupancy of the set, wherein the occupancy state information includes information indicative as to whether the set is full and information indicative as to whether the set is empty, wherein the information indicative as to whether the set is full includes a full-bit which is set in a manner indicative as to whether or not the set is full and wherein the information indicative as to whether the set is empty includes an empty-bit which is set in a manner indicative as to whether or not the set is empty;
access, based on a memory operation for the set, at least a portion of the occupancy state information; and
perform, based on the at least a portion of the occupancy state information (810), the memory operation.

2. The apparatus (100) according to claim 1, wherein the occupancy state information (810) includes at least one of a value indicative of a quantity of the ways of the set that are full, or a value indicative of a quantity of ways of the set that are empty.

3. The apparatus (100) according to any of claims 1 to 2, wherein the occupancy state information (810) includes at least two of a value indicative of a quantity of the ways of the set that are full and a value indicative of a quantity of ways of the set that are empty.

4. The apparatus (100) according to any of claims 1 to 3, wherein the memory operation is a write operation, wherein the cache (800) is configured to initiate an eviction procedure for the set, without scanning the plurality of ways of the set to look for an empty cache line in which to store a memory block, based on a determination that the at least a portion of the occupancy state information (810) is indicative that the set is full.

5. The apparatus (100) according to any of claims 1 to 3, wherein the memory operation is a read operation, wherein the cache (800) is configured to select a next set of the cache (800) to search for a memory block, without scanning the plurality of ways of the set to look for the memory block, based on a determination that the at least a portion of the occupancy state information (810) is indicative that the set is empty.

6. The apparatus (100) according to any of claims 1 to 5, wherein the cache (810) includes a data array (1510), a tag array (1520), and an occupancy state information array (1530), wherein the occupancy state information (810) is maintained within the occupancy state information array (1530).

7. The apparatus (100) according to any of claims 1 to 6, wherein the occupancy state information (810) includes a bit indicative of an occupancy of the set, wherein the bit indicative of the occupancy of the set is determined based on a respective plurality of occupancy status bits for the ways of the set.

8. The apparatus (100) according to claim 7, wherein the occupancy status bits are stored in a respective plurality of entries of a tag array (1520) of the cache (1500), wherein the occupancy status bits are indicative as to whether the respective ways are empty or indicative as to whether the respective ways are full.

9. The apparatus (100) according to any of claims 1 to 8, wherein the memory operation is a write operation for a memory block.

10. The apparatus (100) according to claim 9, wherein, to perform the write operation for the memory block, the cache (800) is configured to:
determine, based on a memory block address of the memory block, that the set is a default set for the memory block;
determine, based on the at least a portion of the occupancy state information (810), whether the set is full; and
perform the write operation for the memory block based on whether the set is full.

11. The apparatus (100) according to claim 9, wherein, to perform the write operation for the memory block, the cache (810) is configured to:
determine, based on the at least a portion of the occupancy state information (810), that the set is not full;
select, from the set, a cache line of the set that is empty; and
store the memory block in the cache line of the set that is empty.

12. The apparatus (100) according to claim 9, wherein, to perform the write operation for the memory block, the cache (800) is configured to:
determine, based on the at least a portion of the occupancy state information (810), that the set is full;
evict, from the set, a cache line of the set; and
store the memory block in the cache line of the set.

13. The apparatus (100) according to any of claims 1 to 8, wherein the memory operation is a read operation for a memory block.

14. The apparatus (100) according to claim 13, wherein, to perform the read operation for the memory block, the cache (800) is configured to:
determine, based on a memory block address of the memory block, that the set is a default set for the memory block;
determine, based on the at least a portion of the occupancy state information (810), whether the set is empty; and
perform the read operation for the memory block based on whether the set is empty.

15. A method, comprising:
maintaining, for a cache (800) including a set having a plurality of ways, occupancy state information (810) indicative of an occupancy of the set, wherein the occupancy state information includes information indicative as to whether the set is full and information indicative as to whether the set is empty, wherein the information indicative as to whether the set is full includes a full-bit which is set in a manner indicative as to whether or not the set is full and wherein the information indicative as to whether the set is empty includes an empty-bit which is set in a manner indicative as to whether or not the set is empty;
accessing, based on a memory operation for the set, at least a portion of the occupancy state information; and
performing, based on the at least a portion of occupancy state information (810), the memory operation.

## Patentansprüche

1. Vorrichtung (100), umfassend:
einen Cache (800), der einen Satz mit einer Vielzahl von Wegen umfasst, wobei der Cache (800) konfiguriert ist zum:
Aufrechterhalten, für den Satz, von Belegungszustandsinformationen (810), die für eine Belegung des Satzes indikativ sind, wobei die Belegungszustandsinformationen Informationen umfassen, die indikativ dafür sind, ob der Satz voll ist, und Informationen, die indikativ dafür sind, ob der Satz leer ist, wobei die Informationen, die indikativ dafür sind, ob der Satz voll ist, ein Voll-Bit umfassen, das auf eine Weise gesetzt ist, die indikativ dafür ist, ob der Satz voll ist oder nicht, und wobei die Informationen, die indikativ dafür sind, ob der Satz leer ist, ein Leer-Bit umfassen, das auf eine Weise gesetzt ist, die indikativ dafür ist, ob der Satz leer ist oder nicht;
Zugreifen, basierend auf einer Speicheroperation für den Satz, auf mindestens einen Teil der Belegungszustandsinformationen; und
Durchführen, basierend auf dem mindestens einen Teil der Belegungszustandsinformationen (810), der Speicheroperation.

2. Vorrichtung (100) nach Anspruch 1, wobei die Belegungszustandsinformationen (810) mindestens eines umfassen von einem Wert, der für eine Anzahl von Wegen des Satzes, die voll sind, indikativ ist, oder einem Wert, der für eine Anzahl von Wegen des Satzes, die leer sind, indikativ ist.

3. Vorrichtung (100) nach einem der Ansprüche 1 bis 2, wobei die Belegungszustandsinformationen (810) mindestens zwei umfassen von einem Wert, der für eine Anzahl von Wegen des Satzes, die voll sind, indikativ ist, und einem Wert, der für eine Anzahl von Wegen des Satzes, die leer sind, indikativ ist.

4. Vorrichtung (100) nach einem der Ansprüche 1 bis 3, wobei die Speicheroperation eine Schreiboperation ist, wobei der Cache (800) konfiguriert ist, eine Räumungsprozedur für den Satz einzuleiten, ohne die Vielzahl von Wegen des Satzes zu durchsuchen, um nach einer leeren Cache-Zeile zu suchen, in der ein Speicherblock gespeichert werden soll, basierend auf einer Bestimmung, dass der mindestens eine Teil der Belegungszustandsinformationen (810) indikativ dafür ist, dass der Satz voll ist.

5. Vorrichtung (100) nach einem der Ansprüche 1 bis 3, wobei die Speicheroperation eine Leseoperation ist, wobei der Cache (800) konfiguriert ist, einen nächsten Satz des Caches (800) auszuwählen, um nach einem Speicherblock zu suchen, ohne die Vielzahl von Wegen des Satzes zu durchsuchen, um nach dem Speicherblock zu suchen, basierend auf einer Bestimmung, dass der mindestens eine Teil der Belegungszustandsinformationen (810) indikativ dafür ist, dass der Satz leer ist.

6. Vorrichtung (100) nach einem der Ansprüche 1 bis 5, wobei der Cache (810) ein Datenarray (1510), ein Tag-Array (1520) und ein Belegungszustandsinformations-Array (1530) umfasst, wobei die Belegungszustandsinformationen (810) innerhalb des Belegungszustandsinformations-Arrays (1530) aufrechterhalten werden.

7. Vorrichtung (100) nach einem der Ansprüche 1 bis 6, wobei die Belegungszustandsinformationen (810) ein Bit umfassen, das für eine Belegung des Satzes indikativ ist, wobei das für die Belegung des Satzes indikative Bit basierend auf einer jeweiligen Vielzahl von Belegungsstatusbits für die Wege des Satzes bestimmt wird.

8. Vorrichtung (100) nach Anspruch 7, wobei die Belegungsstatusbits in einer jeweiligen Vielzahl von Einträgen eines Tag-Arrays (1520) des Caches (1500) gespeichert sind, wobei die Belegungsstatusbits indikativ dafür sind, ob die jeweiligen Wege leer sind, oder indikativ dafür, ob die jeweiligen Wege voll sind.

9. Vorrichtung (100) nach einem der Ansprüche 1 bis 8, wobei die Speicheroperation eine Schreiboperation für einen Speicherblock ist.

10. Vorrichtung (100) nach Anspruch 9, wobei, um die Schreiboperation für den Speicherblock durchzuführen, der Cache (800) konfiguriert ist zum:
Bestimmen, basierend auf einer Speicherblockadresse des Speicherblocks, dass der Satz ein Standardsatz für den Speicherblock ist;
Bestimmen, basierend auf dem mindestens einen Teil der Belegungszustandsinformationen (810), ob der Satz voll ist; und
Durchführen der Schreiboperation für den Speicherblock basierend darauf, ob der Satz voll ist.

11. Vorrichtung (100) nach Anspruch 9, wobei, um die Schreiboperation für den Speicherblock durchzuführen, der Cache (810) konfiguriert ist zum:
Bestimmen, basierend auf dem mindestens einen Teil der Belegungszustandsinformationen (810), dass der Satz nicht voll ist;
Auswählen, aus dem Satz, einer Cache-Zeile des Satzes, die leer ist; und
Speichern des Speicherblocks in der Cache-Zeile des Satzes, die leer ist.

12. Vorrichtung (100) nach Anspruch 9, wobei, um die Schreiboperation für den Speicherblock durchzuführen, der Cache (800) konfiguriert ist zum:
Bestimmen, basierend auf dem mindestens einen Teil der Belegungszustandsinformationen (810), dass der Satz voll ist;
Räumen, aus dem Satz, einer Cache-Zeile des Satzes; und
Speichern des Speicherblocks in der Cache-Zeile des Satzes.

13. Vorrichtung (100) nach einem der Ansprüche 1 bis 8, wobei die Speicheroperation eine Leseoperation für einen Speicherblock ist.

14. Vorrichtung (100) nach Anspruch 13, wobei, um die Leseoperation für den Speicherblock durchzuführen, der Cache (800) konfiguriert ist zum:
Bestimmen, basierend auf einer Speicherblockadresse des Speicherblocks, dass der Satz ein Standardsatz für den Speicherblock ist;
Bestimmen, basierend auf dem mindestens einen Teil der Belegungszustandsinformationen (810), ob der Satz leer ist; und
Durchführen der Leseoperation für den Speicherblock basierend darauf, ob der Satz leer ist.

15. Verfahren, umfassend:
Aufrechterhalten, für einen Cache (800), der einen Satz mit einer Vielzahl von Wegen umfasst, von Belegungszustandsinformationen (810), die für eine Belegung des Satzes indikativ sind, wobei die Belegungszustandsinformationen Informationen umfassen, die indikativ dafür sind, ob der Satz voll ist, und Informationen, die indikativ dafür sind, ob der Satz leer ist, wobei die Informationen, die indikativ dafür sind, ob der Satz voll ist, ein Voll-Bit umfassen, das auf eine Weise gesetzt ist, die indikativ dafür ist, ob der Satz voll ist oder nicht, und wobei die Informationen, die indikativ dafür sind, ob der Satz leer ist, ein Leer-Bit umfassen, das auf eine Weise gesetzt ist, die indikativ dafür ist, ob der Satz leer ist oder nicht;
Zugreifen, basierend auf einer Speicheroperation für den Satz, auf mindestens einen Teil der Belegungszustandsinformationen; und
Durchführen, basierend auf dem mindestens einen Teil der Belegungszustandsinformationen (810), der Speicheroperation.

## Revendications

1. Appareil (100), comprenant :
un cache (800) comprenant un ensemble ayant une pluralité de voies, dans lequel le cache (800) est configuré pour :
maintenir, pour l'ensemble, des informations d'état d'occupation (810) indicatives d'une occupation de l'ensemble, dans lequel les informations d'état d'occupation comprennent des informations indicatives de si l'ensemble est plein et des informations indicatives de si l'ensemble est vide, dans lequel les informations indicatives de si l'ensemble est plein comprennent un bit de plénitude qui est établi d'une manière indicative de si l'ensemble est plein ou non et dans lequel les informations indicatives de si l'ensemble est vide comprennent un bit de vacuité qui est établi d'une manière indicative de si l'ensemble est vide ou non ;
accéder, sur la base d'une opération de mémoire pour l'ensemble, à au moins une partie des informations d'état d'occupation ; et
effectuer, sur la base de ladite au moins une partie des informations d'état d'occupation (810), l'opération de mémoire.

2. Appareil (100) selon la revendication 1, dans lequel les informations d'état d'occupation (810) comprennent au moins une parmi une valeur indicative d'une quantité de voies de l'ensemble qui sont pleines, ou une valeur indicative d'une quantité de voies de l'ensemble qui sont vides.

3. Appareil (100) selon l'une quelconque des revendications 1 à 2, dans lequel les informations d'état d'occupation (810) comprennent au moins deux parmi une valeur indicative d'une quantité de voies de l'ensemble qui sont pleines, et une valeur indicative d'une quantité de voies de l'ensemble qui sont vides.

4. Appareil (100) selon l'une quelconque des revendications 1 à 3, dans lequel l'opération de mémoire est une opération d'écriture, dans lequel le cache (800) est configuré pour initier une procédure d'éviction pour l'ensemble, sans parcourir la pluralité de voies de l'ensemble pour rechercher une ligne de cache vide dans laquelle stocker un bloc de mémoire, sur la base d'une détermination que ladite au moins une partie des informations d'état d'occupation (810) est indicative de ce que l'ensemble est plein.

5. Appareil (100) selon l'une quelconque des revendications 1 à 3, dans lequel l'opération de mémoire est une opération de lecture, dans lequel le cache (800) est configuré pour sélectionner un ensemble suivant du cache (800) pour y rechercher un bloc de mémoire, sans parcourir la pluralité de voies de l'ensemble pour rechercher le bloc de mémoire, sur la base d'une détermination que ladite au moins une partie des informations d'état d'occupation (810) est indicative de ce que l'ensemble est vide.

6. Appareil (100) selon l'une quelconque des revendications 1 à 5, dans lequel le cache (810) comprend un réseau de données (1510), un réseau d'étiquettes (1520), et un réseau d'informations d'état d'occupation (1530), dans lequel les informations d'état d'occupation (810) sont maintenues au sein du réseau d'informations d'état d'occupation (1530).

7. Appareil (100) selon l'une quelconque des revendications 1 à 6, dans lequel les informations d'état d'occupation (810) comprennent un bit indicatif d'une occupation de l'ensemble, dans lequel le bit indicatif de l'occupation de l'ensemble est déterminé sur la base d'une pluralité respective de bits d'état d'occupation pour les voies de l'ensemble.

8. Appareil (100) selon la revendication 7, dans lequel les bits d'état d'occupation sont stockés dans une pluralité respective d'entrées d'un réseau d'étiquettes (1520) du cache (1500), dans lequel les bits d'état d'occupation sont indicatifs de si les voies respectives sont vides ou indicatifs de si les voies respectives sont pleines.

9. Appareil (100) selon l'une quelconque des revendications 1 à 8, dans lequel l'opération de mémoire est une opération d'écriture pour un bloc de mémoire.

10. Appareil (100) selon la revendication 9, dans lequel, pour effectuer l'opération d'écriture pour le bloc de mémoire, le cache (800) est configuré pour :
déterminer, sur la base d'une adresse de bloc de mémoire du bloc de mémoire, que l'ensemble est un ensemble par défaut pour le bloc de mémoire ;
déterminer, sur la base de ladite au moins une partie des informations d'état d'occupation (810), si l'ensemble est plein ; et
effectuer l'opération d'écriture pour le bloc de mémoire sur la base de si l'ensemble est plein.

11. Appareil (100) selon la revendication 9, dans lequel, pour effectuer l'opération d'écriture pour le bloc de mémoire, le cache (810) est configuré pour :
déterminer, sur la base de ladite au moins une partie des informations d'état d'occupation (810), que l'ensemble n'est pas plein ;
sélectionner, dans l'ensemble, une ligne de cache de l'ensemble qui est vide ; et
stocker le bloc de mémoire dans la ligne de cache de l'ensemble qui est vide.

12. Appareil (100) selon la revendication 9, dans lequel, pour effectuer l'opération d'écriture pour le bloc de mémoire, le cache (800) est configuré pour :
déterminer, sur la base de ladite au moins une partie des informations d'état d'occupation (810), que l'ensemble est plein ;
évincer, de l'ensemble, une ligne de cache de l'ensemble ; et
stocker le bloc de mémoire dans la ligne de cache de l'ensemble.

13. Appareil (100) selon l'une quelconque des revendications 1 à 8, dans lequel l'opération de mémoire est une opération de lecture pour un bloc de mémoire.

14. Appareil (100) selon la revendication 13, dans lequel, pour effectuer l'opération de lecture pour le bloc de mémoire, le cache (800) est configuré pour :
déterminer, sur la base d'une adresse de bloc de mémoire du bloc de mémoire, que l'ensemble est un ensemble par défaut pour le bloc de mémoire ;
déterminer, sur la base de ladite au moins une partie des informations d'état d'occupation (810), si l'ensemble est vide ; et
effectuer l'opération de lecture pour le bloc de mémoire sur la base de si l'ensemble est vide.

15. Procédé, comprenant :
maintenir, pour un cache (800) comprenant un ensemble ayant une pluralité de voies, des informations d'état d'occupation (810) indicatives d'une occupation de l'ensemble, dans lequel les informations d'état d'occupation comprennent des informations indicatives de si l'ensemble est plein et des informations indicatives de si l'ensemble est vide, dans lequel les informations indicatives de si l'ensemble est plein comprennent un bit de plénitude qui est établi d'une manière indicative de si l'ensemble est plein ou non et dans lequel les informations indicatives de si l'ensemble est vide comprennent un bit de vacuité qui est établi d'une manière indicative de si l'ensemble est vide ou non ;
accéder, sur la base d'une opération de mémoire pour l'ensemble, à au moins une partie des informations d'état d'occupation ; et
effectuer, sur la base de ladite au moins une partie des informations d'état d'occupation (810), l'opération de mémoire.
